Europäisches Patentamt

European Patent Office

Office européen des brevets

(19)

(11) **EP 1 277 874 A1**

(12) **EUROPEAN PATENT APPLICATION**
published in accordance with Art. 158(3) EPC

(43) Date of publication:
**22.01.2003 Bulletin 2003/04**

(21) Application number: **01926051.2**

(22) Date of filing: **27.04.2001**

(51) Int Cl.7: **D06M 11/83**, D06M 11/49,
B60C 9/00, B60C 15/06

(86) International application number:
**PCT/JP01/03726**

(87) International publication number:
**WO 01/083874 (08.11.2001 Gazette 2001/45)**

(84) Designated Contracting States:
**AT BE CH CY DE DK ES FI FR GB GR IE IT LI LU MC NL PT SE TR**

(30) Priority: **28.04.2000 JP 2000131569**

(71) Applicant: **BRIDGESTONE CORPORATION Tokyo 104-0031 (JP)**

(72) Inventors:
• **NAKAMURA, Masaaki
  Kodaira-shi, Tokyo 187-0031 (JP)**
• **YOSHIKAWA, Masato
  Kodaira-shi, Tokyo 187-0022 (JP)**

(74) Representative: **Whalley, Kevin et al
MARKS & CLERK,
57-60 Lincoln's Inn Fields
London WC2A 3LS (GB)**

(54) **RUBBER-REINFORCING FIBER, PROCESS FOR PRODUCING THE SAME, AND RUBBER PRODUCT AND PNEUMATIC TIRE EACH MADE WITH THE SAME**

(57) The rubber-reinforcing fiber of the present invention is provided with a coating layer of a thickness of 10 Å to 40 μm. The coating layer is formed by dry plating and contains at least one metal and/or metal compound selected from the group consisting of cobalt, zinc, copper, titanium, silver, nickel and compounds of the aforesaid metals. With such a coating layer, the rubber-reinforcing fiber of the present invention forms a firm adhesion to a rubber component and drastically improves the fatigue resistance and durability of a rubber article, particularly, a pneumatic tire.

EP 1 277 874 A1

**Description**

Technical Field

The present invention relates to a rubber-reinforcing fiber which is coated with a layer containing a metal or a metal compound so as to show an excellent fatigue resistance during its use in rubber, a method for producing the rubber-reinforcing fiber, and a rubber article and a pneumatic tire reinforced with the rubber-reinforcing fiber.

Background Art

Various composite materials comprising a reinforcing material and a rubber have been used in the production of a pneumatic tire, a belt conveyer, etc. An indispensable requirement for such composite materials is a firm adhesion between the reinforcing material and the rubber.

To meet the requirement, Japanese Patent Application Laid-Open No. 62-87310 assigned to the same assignee as that of this application proposes a method for producing a substrate-rubber composite, in which a firm substrate-to-rubber bonding upon vulcanization is achieved by depositing a thin metal film mainly comprising zinc and copper on the substrate by dry plating. In Japanese Patent Application Laid-Open Nos. 62-87311 and 62-189117 also assigned to the same assignee, is proposed a method of producing a substrate-rubber composite, in which a firm substrate-to-rubber bonding upon vulcanization is achieved by dry-plating a cobalt film or a cobalt alloy film on the substrate.

Japanese Patent Application Laid-Open No. 63-303057 proposes to oxidize cobalt by a heat treatment after a cobalt film-formation to enhance the endurance (resistance to wet heat degradation) of a substrate-rubber composite. To enhance the endurance (resistance to wet heat degradation) of a substrate-rubber composite after production, Japanese Patent Application Laid-Open No. 3-220241 proposes to partially oxidize metallic cobalt during the formation of a cobalt film or a cobalt alloy film, thereby controlling the reaction between rubber and cobalt to improve the heat resistance of the adhesion. Japanese Patent Application Laid-Open No. 8-296032 assigned to the same assignee proposes a method for producing a rubber composite, which comprises a step of forming a cobalt oxide thin film on a substrate surface, a step of forming a rubber composition layer on the thin film, and a step of vulcanizing the rubber composition. In the proposed method, the cobalt oxide thin film is formed by sputtering a cobalt target in an inert gas containing an oxygen-containing gas at an electric power equal to or larger than a rising point at which a voltage between the target and the substrate steeply rises with respect to the electric power supplied to the target from a DC power source.

Also proposed is a surface treatment of a wire, a tube or a ribbon material by sputtering. For example, Japanese Patent Application Laid-Open No. 63-33065 proposes a method of treating surface of a wire, a rod or a tube material by sputtering, although quite silent as to the geometric configuration, raw material of fiber and the material of coating film, which are required for a rubber-reinforcing fiber. It is also reported that the uniform deposition onto the outer surface of the wire, the rod or the tube material can be obtained, and as a result thereof, a uniform plated film can be formed by treating surface of a plurality of the wire, the rod or the tube materials while keeping them apart $(\sqrt{2} - 1)d$ or more from each other, wherein d is a diameter of the wire, the rod or the tube material. Japanese Patent No. 2512913 proposes a method of forming a cobalt-containing metal film by a coaxial magnetron sputtering on a metal fiber, but not an organic fiber or an inorganic fiber made of a non-metallic compound, which is made of an amorphous steel cord principally made of steel or iron. The document also proposes an application of the method to a wire, a rod or a tube material made of an organic or inorganic raw material, and teaches fibers, strands, ribbons and pipes as the organic fibrous material, and wire, rod and tube materials made of quartz, glass or ceramics as the inorganic fibrous material, although teaching nothing about the raw material and geometric configuration suitable for the rubber-reinforcing fiber. As will be shown as a comparative example of the present invention, a sufficient adhesion is not obtained when a twisted cord is used as the organic fiber. Thus, the adhesive strength of an organic or inorganic fiber for reinforcing a rubber article depends on its geometric structure. The prior art, however, fails to address the geometric fiber structure suitable for achieving a sufficient adhesive strength. The prior art also fails to consider the materials and properties of fiber suitable for the rubber-reinforcing fiber as those disclosed in the examples of the present invention.

The method of dry-plating a metal or a metal compound thin film on a substrate is successful in improving the adhesion of a substrate, such as poly(ethylene terephthalate), aromatic polyamide, polyarylate, and polybenzazole, which is difficult to be adhered firmly to rubber by a known adhesive composition because of its dense molecular structure and a small number of functional groups. The thickness of a metal or a metal compound coating is relatively small and can be reduced to as thin as about several hundred angstroms, whereas a known adhesive composition requires a relatively larger coating thickness, for example, about several micrometers. Therefore, the dry-plating method is of low material cost as compared with the conventional method of using an adhesive composition. In addition, since no solvent is required, the dry-plating method causes substantially no environmental and hygienic problem due to fume and odor from a solvent. Thus, the application of the dry-plating method to the production of a rubber composite has various advantages.

The inventors have applied the dry-plating method to a multifilament cord (twisted cord) which has been widely used in the production of a rubber article, such as a pneumatic tire and a conveyer belt, for use under high strain conditions. As a result, it has been found that the dry-plated cord is improved in handling workability, but the cord-to-rubber adhesion is still low and insufficient. As a result of further study, the inventors have found that the coating thickness of inner filaments of the twisted cord is small because the twisted cord is made of a bundle of many individual filaments, and that the filament shows little adhesive action to rubber when the coating thickness becomes 10 Å or less, thereby causing the cord to peel off from rubber, for example, by the strain during tire operation. For this reason, the twisted cord (multifilament cord) is difficult to adhere to rubber by merely using the dry-plating. Generally, a fiber aggregate comprising collected parallel filaments has a low adhesive strength for the use as a rubber-reinforcing fiber. Japanese Patent No. 2512913, however, reports that the results of the peeling test on the metal fiber materials made of steel cord or amorphous steel cord are 100% rubber failure. As a result of the study made by the inventors, however, it has been found that a twisted cord made of an organic fiber material is poor in its adhesion to rubber as shown in the examples of the present invention. Since the organic fiber material is easily bent as compared with the fiber material made of steel cord, the filament-to-filament space of the organic twisted cord is likely to be broadened by bending due to the strain during tire operation or due to the peeling force during the adhesion test. As a result thereof, the adhesive failure occurs at filaments having a thin coating located inside of the bundle of filaments, thereby decreasing the adhesive strength.

The multifilament cord is widely used in the production of a rubber article, such as a tire, which is used under high strain conditions, generally because of its high fatigue endurance due to the twisted structure. Namely, the multifilament cord is made of a bundle of numbers of filaments and has a twisted structure formed by a ply twist and a cable twist. With this twisted structure, even if a stress such as compression strain is applied to a tire during its operation, individual fine filaments having a twist angle bend so as to relieve and absorb the applied compression strain. For this reason, it is generally considered that the twisted cord exhibits an excellent fatigue resistance.

Although the twisted cord excellent in the fatigue resistance comes to find its application to a rubber article which is used under high strain conditions, there have been attempts, in view of production cost and tire performance, to use a monofilament cord as a rubber reinforcing fiber for a tire carcass, etc. The monofilament cord is advantageous in cost because the twisting process can be omitted to reduce the production cost. Upon comparing under the same fiber material and the same total fineness (total dtex), a monofilament cord is higher in elasticity and lower in shrinkage than a twisted cord for the structural reason. Therefore, it is expected that the weight of tire can be reduced by reducing the use amount of the rubber-reinforcing material, if the elasticity as the rubber-reinforcing material can be increased.

To realize this, the application of the monofilament cord to pneumatic tires has been attempted, and Japanese Patent Application Laid-Open No. 52-110918 in the 1970s discloses a method for producing a nylon monofilament cord, and United States Patent 4,360,050 proposes to apply a polyester monofilament cord of a large dtex to tires.

As mentioned above, however, because of the insufficient fatigue resistance of the monofilament cord against the external force as compared with the twisted cord, a tire reinforced with the monofilament cord is low in its endurance and may cause problems during the practical use. In driving endurance test, particularly, a cord break is sometimes caused on a tire having a carcass reinforced with a monofilament cord by a driving compression stress applied to a turn-up portion of the carcass around a bead portion because of the insufficient fatigue resistance of the monofilament cord. The observation on the broken portion of the cord shows that the cord break is due to an interfacial breaking (generally called as a fibrillation breaking) at the inside of the filament by the compression stress. Therefore, to apply a monofilament cord to tire, it is one of the important technical interests to ensure a sufficient fatigue resistance of the monofilament cord under compression stress.

To improve the fatigue resistance of the monofilament cord, Japanese Patent Application Laid-Open No. 52-110918 discloses a process for producing a monofilament cord having its properties improved by a steam heating. The proposed monofilament cord has been attempted to be applied to various types of tires as disclosed in Japanese Patent Application Laid-Open Nos. 2-99610 and 2-127507.

However, the application of the monofilament cord treated by the steam heating to tires has not yet been put into practice. Japanese Patent Application Laid-Open No. 3-185111 proposes to reinforce a tire carcass with a monofilament cord made of a polyester fiber having a low carboxyl group content. The proposed monofilament cord is, however, still insufficient in the fatigue resistance against the physical fatigue during its use in tires, and there is a fear of cord failure during tire operation to cause practical problems.

As a result of the study on the application of a monofilament to tires, particularly, the application of a polyester monofilament to tires, Japanese Patent Application Laid-Open No. 9-67732 filed by the same assignee as the present application proposes a pneumatic tire excellent in the endurance around the bead portion and the operation stability by using a polyester monofilament which is prepared by regulating the properties, such as intrinsic viscosity (IV), birefringence ($\Delta$n), crystal orientation, amorphous orientation, density, fineness, tenacity, and initial modulus of elasticity, of the polyester monofilament after treatment with an adhesive composition within respective specific ranges. The adhesive composition used therein is a known adhesive (RFL) containing resorcin, formaldehyde and latex. Thus, the fatigue resistance of the material for the monofilament cord has been drastically improved by the inventive methods of the present inventors and others, and it is expected that a monofilament cord can be applied to the production of a tire having a high safety during tire operation as far as the material properties of the monofilament are concerned.

When a known adhesive composition is used, however, the adhesion of a monofilament cord to rubber is inferior to that of a twisted cord to rubber. This is because that, when immersed in a rubber-fiber adhesive composition such as RFL solution, the penetration of an adhesive composition into the space between filaments does not occur in the monofilament cord as in the case of a twisted cord, thereby failing to obtain a mechanical anchoring effect. Additional problem of the monofilament cord in the adhesion properties is that the adhesive coating on the monofilament cord is thinner than that on a twisted cord because of a smaller surface roughness of the monofilament cord. For example, the adhesive coating on a cord generally becomes thinner at its vertically upper side due to gravity. This phenomenon is remarkable in the case of monofilament because its surface is less roughened as compared with the twisted cord, thereby reducing the adhesion strength at the initial stage or after fatigue.

Therefore, the known dipping method in the adhesive composition is not suitable for the monofilament cord in view of its geometric structure, and the above problems should be solved to attain a stable adhesion properties of the monofilament. In addition, with the recent increasing improvement in tire performance, the strain applied to a tire cord during tire operation becomes severe and more severer. Under such a severe condition, the polyester monofilament treated with RFL proposed in Japanese Patent Application Laid-Open No. 9-67732 referred to above is likely to become insufficient in the durability of the interfacial adhesion between fiber and rubber, because such a monofilament shows a relatively low adhesive property when deficient in mechanical anchor.

Recently, automotive tires are required to have increasingly high performance, particularly, required to simultaneously and sufficiently meet a low fuel consumption, a conformable ride and a stable driving operation. For example, as reported in Japanese Utility Model Publication No. 47-16084, French Patent No. 1260138, and United States Patent No. 4,067,373, the fuel consumption and the driving operation can be improved by the use of a bead filler made of a extremely rigid rubber, but at the expense of the ride. To simultaneously satisfy the antinomic stable driving operation and comfortable ride, it is effective to increase the spring constant of tire in the circumferential direction without changing the spring constant in the vertical direction as taught in Japanese Patent Application Laid-Open No. 11-334323. Therefore, various considerations have been made on compounding short fibers with vulcanizable rubber.

As a method for bonding rubber to short fibers, recently proposed is a method of fusing a kneaded rubber to short fibers under heating, a method of bonding rubber to short fibers coated with an adhesive composition, etc. have been proposed. In the method of kneading a rubber wit short fibers and subsequent heating, the affinity of the short fibers for rubber is attained by softening or melting of the short fibers under heating (Japanese Patent Application Laid-Open No. 7-18121).

Heat-fusible resins, however, are limited to thermoplastic resins which are softened at relatively low temperatures. A thermoplastic resin with a low melting point is generally not so elastic as compared with a rubber composite containing high-melting, high-elastic short fibers. Therefore, to increase the spring constant of tire in the circumferencial direction without changing in the vertical direction by reinforcing a bead filler with short fibers made of a thermoplastic resin having a low melting point, an increased amount of short fibers is required. Thus, a thermoplastic resin is not necessarily suitable for reinforcing a rubber efficiently.

It is surely preferable if the adhesion property of the fiber surface made of a material which is heat-fusible at relatively low temperatures could be improved by dry plating, etc. If short fibers are made of a material having a high melting point, particularly, having a melting point higher than the highest process temperature, such as the vulcanization temperature, in the manufacture of rubber articles, the resin is not softened and the heat fusion of the short fibers becomes difficult. To remedy this, generally employed is to coat an adhesive composition on the short fibers by immersing or spraying.

In such a method, however, the adhesive composition causes the short fibers to come together, resulting in a practical problem of sticking between the short fibers before dispersing the short fibers throughout a rubber. As mentioned above, a hard-to-adhere fiber having a dense molecular structure and a small number of functional groups is difficult to bond to rubber by a known adhesive composition and shows a low fatigue resistance. Therefore, there has been a demand for a rubber reinforcing short fiber capable of forming a firm adhesion to rubber and free from a reduction of workability by sticking due to an adhesive composition, even when the short fiber is difficult to adhere because of its high elastic modulus and high melting point, or the short fiber is low-melting but difficult to be heat-fused because of its poor compatibility with a rubber.

Disclosure of Invention

In view of the above state of the art, the present invention has been made to solve the above problems.

Namely, an object of the invention is to provide a rubber-reinforcing organic or inorganic fiber which is free from the sticking between fibers, capable of forming a firm adhesion to rubber, and excellent in the fatigue resistance and the endurance. Another object of the invention is to provide a method for producing such a rubber reinforcing organic or inorganic fiber. Still another object of the invention is to provide a rubber-fiber composite and a pneumatic tire reinforced with the rubber-reinforcing organic or inorganic fiber.

As a result of extensive study for solving the above problems, the inventors have found that a rubber-reinforcing organic or inorganic fiber provided with a coating layer containing a specific metal and/or its compound, and a rubber article, such as a pneumatic tire, reinforced with the rubber-reinforcing organic inorganic fiber show a high fatigue resistance during the use in rubber. On the basis of this finding, the invention has been accomplished.

Thus, the present invention provides a rubber-reinforcing fiber comprising an organic or inorganic fiber provided with a coating layer of 10 Å to 40 µm thick, the coating layer containing at least one metal and/or metal compound selected from the group consisting of cobalt, zinc, copper, titanium, silver, nickel and compounds of the preceding metals.

Further, the present invention provides a method for producing the rubber-reinforcing fiber, comprising a step of forming a coating layer of 10 Å to 40 µm thick on an organic or inorganic fiber by a dry plating method, the coating layer containing at least one metal and/or metal compound selected from the group consisting of cobalt, zinc, copper, titanium, silver, nickel and compounds of the preceding metals.

Still further, the present invention provides a rubber-fiber composite comprising the rubber-reinforcing organic fiber and a rubber composition.

Still further, the present invention provides a rubber-fiber composite comprising the rubber-reinforcing organic or inorganic fiber, and a pneumatic tire produced by using the rubber-fiber composite.

Brief Description of Drawings

Fig. 1 is a flow diagram showing the production steps for producing the rubber-reinforcing fiber of the present invention;
Fig. 2 is a schematic illustration showing a mode of plural fiber materials arranged in parallel to run through a comb-shaped guide;
Fig. 3 is a schematic illustration showing a plasma surface-treating apparatus used for producing the rubber-reinforcing fiber of the present invention;
Fig. 4 is a schematic illustration showing a dry plating apparatus used for producing the rubber-reinforcing fiber of the present invention;
Fig. 5 is a perspective view showing a portion around a bead of a pneumatic tire in the working example;
Fig. 6 is a cross-sectional view of a pneumatic tire in the working example; and
Fig. 7 is a schematic illustration showing the test method for the sticking strength between rubber-reinforcing fibers.

Best Mode for Carrying Out the Invention

The present invention will be described below in detail.

The rubber-reinforcing fiber of the invention comprises an organic or inorganic fiber provided with a coating layer of 10 Å to 40 µm thick. The coating layer contains at least one metal and/or metal compound selected from the group consisting of cobalt, zinc, copper, titanium, silver, nickel and compounds of the preceding metals.

The coating layer preferably comprises an alloy of cobalt and at least one alloying element such as zinc, copper, chromium, titanium, nickel, fluorine, silver, tungsten, tantalum, and molybdenum, or a cobalt compound such as oxide, nitride, and carbide represented by $CoO_k$, $CoN_m$, and $CoC_n$, wherein k is 0 to 1.8, preferably 0 to 1.6; m is 0 to 1.6, preferably 0 to 1.4; and n is 0 to 3.2, preferably 0 to 2.8.

The cobalt content of the coating layer is 5% by weight or more, preferably 20% by weight or more, and more preferably 50% by weight or more.

The thickness of the coating layer is preferably from 10 Å to 40 µm, more preferably 15 Å to 5 µm, and particularly preferably 20 Å to 0.5 µm. A thickness less than 10 Å is too small, resulting in a reduced adhesion to a rubber composition. A thickness exceeding 40 µm is too large for the diameter of the fiber, changing the inherent properties of the fiber.

The thickness distribution of the coating on the fiber surface is not particularly limited. Namely, it is sufficient for the invention that the fiber surface is partly coated in a thickness of 10 Å to 40 µm and the adhesion effect is obtained, even if the fiber surface is not entirely coated in a thickness of 10 Å to 40 µm. Since a high adhesion endurance is ensured under strain stress during the use, it is preferred that 50% or more of the fiber surface is coated in a thickness of 10 Å to 40 μm. As a matter of course, it is particularly preferred that the fiber surface is uniformly coated in a thickness of 10 Å to 40 μm throughout its entire surface.

Any organic or inorganic fiber materials may be used in the present invention without specific limitation as far as their raw materials are organic or inorganic. Examples of the organic fiber material include synthetic fibers, semisynthetic fibers, regenerated fibers, and natural fibers. Preferred are fibers or short fibers made of polyester, polyamide, poly(vinyl alcohol), acrylic polymer, polyolefin, polyimide, poly(phenylene sulfide), poly(ether ether ketone), polybenzazole, viscose, solvent-spun cellulose, or carbon. As the inorganic fiber material, preferred is a fiber made of a non-metallic compound, and more preferred is a ceramic fiber, a glass fiber, a carbon fiber, a rock fiber, a slag fiber, etc. and short fibers of the aforesaid fibers. Particularly preferred is a fiber or short fiber made of a non-electrically conductive inorganic fiber material.

Although the coating layer of the present invention can be formed on the surface of a metal fiber material, the plating of a metal material can be made by a known method such as a cost-effective electroplating.

The organic fiber material will be described in more detail.

As the raw synthetic resin of the synthetic fiber, usable are fiber-forming polymers, for example, polyester such as poly(ethylene terephthalate), poly(ethylene naphthalate) and polyarylate; aliphatic polyamide such as 6-nylon, 6,6-nylon and 4,6-nylon; aromatic polyamide such as a para-bonding polyamide and a meta-bonding polyamide; polyolefin such as a high-molecular weight polyethylene and polypropylene; poly(vinyl alcohol) and a copolymer containing vinyl alcohol unit such as vinyl alcohol-vinyl chloride graft copolymer; polyacrylonitrile and a copolymer containing acrylonitrile unit such as acrylonitrile-vinyl chloride copolymer; copolymer containing vinyl chloride unit such as poly (vinyl chloride); copolymer containing vinylidene chloride unit such as poly(vinylidene chloride); polycarbodiimide; phenol resin; Benzoat; poly(ether ether ketone); poly(phenylene sulfide); polyimide; poly(ether imide); polyketone such as poly(olefin ketone); polybenzazole such as polybenzimidazole; and polyurethane. The synthetic resin material recited above may be copolymerized with another copolymerizable monomer to contain, up to 50 mol%, the constitutional unit derived from another polymerizable monomer.

The semisynthetic fiber may be acetate fiber. As the regenerated fiber, for example, a cuprammonium fiber; a viscose fiber such as rayon and polynosic; a regenerated cellulosic fiber such as a solvent-spun cellulosic fiber exemplified by Lyocell; and a chitin fiber made of chitin which is a polysaccharide of N-acetyl-D-glucosamine are usable.

The natural fiber may include a vegetable fiber such as ramie and cotton fiber; and an animal fiber such as wool and silk.

The organic fiber referred to herein may further include a fiber obtained by processing an organic fiber after spinning, for example, a fiber obtained by coating the organic fiber cited above with an organic resin.

The inorganic fiber material will be described below in more detail.

Examples of the ceramic fiber include alumina fiber, silica fiber, aluminosilicate fiber, zirconia fiber, boron nitride fiber, polyborazine-boron nitride fiber, silicon nitride fiber, polytyrannocarbosilane-titanium-containing silicon carbide fiber (Tyranno fiber), silicon carbide fiber, polycarbosilane-silicon carbide fiber, potassium titanate fiber, etc. Examples of the carbon fiber include a PAN-based carbon fiber and a pitch-based carbon fiber. Examples of the rock fiber include fibers produced by centrifugally blowing off a fused mixture of andesite and silica stone. Examples of the slug fiber include fibers made of a blast furnace slag. The inorganic fiber may be in the form of element and compound such as oxide, carbide, nitride and halide, may be single component or multicomponent, or may be in any crystalline state of single-crystalline, polycrystalline, partially crystalline, or amorphous state. In addition, the inorganic fiber may be used in various fiber length, for example, as a continuous fiber, a long fiber, a short fiber and a whisker. According to "Sen-i Binran" 2nd. ed., edited by Fiber Society of Japan, Maruzen, 1994, p66, fibers of 10 mm long or more are classified into long fibers, fibers of less than 10 mm long are classified into short fibers, and fibers having an aspect ratio of less than 10 and a cross-sectional area of less than $5 \times 10^{-4}$ cm$^2$ are classified into whiskers. In the present invention, however, whiskers are included in the category of short fiber.

The fiber material used in the present invention may be a single-component fiber or a multicomponent fiber obtained by spinning two or more components. The multicomponent fiber is roughly classified into an incorporated fiber and a composite fiber, each being produced by an incorporate spinning and a composite spinning.

In the incorporated fiber, a granular or acicular component is dispersed in a matrix component discontinuously in the fiber length direction. The matrix component is a fiber-forming component and the dispersed component may be an organic or inorganic compound.

The composite fiber is also called as a conjugated fiber, in which a plurality of components continuously extend along the fiber length direction and adhere to each other to form a single fiber. Although each component of the composite fiber is usually made of a fiber-forming polymer, a non-spinnable material with a poor fiber-forming property can be used as a part of the component. The composite fiber (conjugated fiber) is exemplified by a core-sheath fiber, a multi-core fiber, a radial fiber, a parallel fiber, a multi-parallel fiber, etc.

In addition, the organic or inorganic fiber used in the present invention may have a structure containing voids in the inside thereof, such as a hollow fiber structure and a porous structure. The cross-sectional shape of the fiber is not specifically limited, and preferred is a cross-sectional shape with little peripheral roughness, such as circular shape and elliptic shape. By "a cross-sectional shape with little peripheral roughness" is meant a cross-sectional shape which is hard to project shadows of the peripheral roughness over the fiber surface when externally irradiated with electric field or particles.

The production of the rubber-reinforcing organic or inorganic fiber of the present invention includes a step of forming a coating layer on the fiber mentioned above by dry-plating. The coating layer is formed by dry-plating preferably on an organic fiber material comprising a single filament or ten pieces or less of filaments, more preferably comprising a single filament. This is because that the dry plating cannot be effected in the inside of a bundle of a large number of filaments, and therefore, the thickness of the coating layer becomes smaller than 10 Å in the inside thereof, reducing the adhesion property.

As the fiber aggregate for producing the rubber-reinforcing fiber of the present invention by dry-plating, preferably used are those in which two adjacent filaments are substantially not bundled together, for example, a fiber aggregate made of entangled plural filaments. Examples of the form of the fiber aggregate include glass wool, non-woven fabric, knitted fabric and net fabric.

The fiber aggregate may be treated by dry plating on one side or both sides, preferably on both sides.

Although the form of the fiber aggregate is not specifically limited as far as a plating layer of 10 Å to 40 $\mu$m thick is formed partly on individual filaments which construct the fiber aggregate, preferred is a form which allows the uniform formation of a plating layer of 10 Å to 40 $\mu$m thick on the entire surface of the individual filaments.

The form of the fiber aggregate for enabling the formation of a uniform plating layer on the filaments in the inside thereof is not specifically limited as far as the plating particles permeate the fiber aggregate. To ensure the even permeation of the plating particles, preferred is a fiber aggregate made of filaments which are substantially not bundled together. As a matter of course, a smaller thickness of the fiber aggregate and a broader space between the filaments are preferred to enhance the permeation of the dry-plating particles through the fiber aggregate. In any event, the structure and thickness of the fiber aggregate and the space between the filaments can be arbitrarily selected if a sufficient permeation of the dry-plating particles through the fiber aggregate is ensured.

The permeability of the fiber aggregate to the dry-plating particles is evaluated by comparing the plating thicknesses of two films, one being disposed on the front surface of the fiber aggregate and the other being disposed on the back surface thereof, after a dry plating treatment. Preferred is a permeability which allows the plating particles passing through the fiber aggregate to form a plating layer having a maximum thickness of 10 Å or more on the film of the back surface when a dry plating is conducted under such conditions as to form a plating layer having a maximum thickness of 40 $\mu$m or less on the film of the front surface. More preferred is a fiber aggregate having a permeability to the dry-plating particles which allows the film on the back surface to be coated with a plating layer having a thickness of 10 Å or more in 90% or more of its surface area.

Although the structure of the fiber aggregate made of filaments substantially not bundled together is not specifically limited as far as a sufficient permeation of the dry-plating particles is attained, preferred is a fiber aggregate made of ten pieces or less of filaments which are arranged in parallel with a space of $(\sqrt{2}-1)$d. As mentioned above, Japanese Patent Application Laid-Open No. 63-303065 teaches that a space of $(\sqrt{2}-1)$d or more is a preferred space of the filaments for forming a plating layer. Since the filaments in the fiber aggregate come to contact with each other by gravity, the space is reduced to $(\sqrt{2}-1)$d or less. As a result of a continuous study of the inventors, however, it has been found that a desired plating layer is formed and a sufficient adhesion strength is obtained when a fiber aggregate is made of ten pieces or less of parallel filaments even if the space between the filaments is reduced to $(\sqrt{2}-1)$d or less.

Since the filaments of the fiber aggregate do not come close to each other, the filaments are brought into contact with each other at a point or brought closer to each other at a point. Therefore, a sufficient permeation of the dry-plating particles through a fiber aggregate can be attained even when the space is reduced to $(\sqrt{2}-1)$d or less. In the case of a fiber aggregate, such as a twisted cord, comprising parallel filaments closely adjoined each other, however, the permeation of the dry-plating particles through the fiber aggregate becomes low when the number of filaments exceeds ten, thereby making the formation of a uniform plating difficult to fail to exhibit a sufficient adhesion strength.

In the present invention, the parallel filaments mean adjoining filaments which are arranged with an included angle of 30° or less. The included angle is an angle defined by filament directions.

Before forming the coating layer by dry plating, it is preferable to remove impurities such as oil on the fiber surface. This is because that intervening impurities between the coating and the fiber surface are likely to cause the peeling of the plated coating layer together with the impurities. The removal of the impurities can be effected by a wiping by using an organic solvent, a corona surface treatment, a plasma cleaning, or an etching treatment. The removing treatment is preferably carried out on filaments not bundled together, because the oil on the surface of a filament inside a cord made of a plurality of bundled filament cannot be thoroughly removed.

The plasma cleaning is preferably conducted by a plasma treatment under a reduce pressure of 1 Torr or lower and a radiofrequency of 13.56 MHz in an electric field of 100 W for 2 to 10 min. The supply gas is preferably oxygen, because the plasma treatment under oxygen atmosphere simultaneously conducts the oxidation and the etch-

EP 1 277 874 A1

ing of the oil on the fiber surface.

In the production method of the present invention, the dry plating is effected, for example, by a vacuum deposition, an ion plating, a DC magnetron sputtering, a diode sputtering, a facing target sputtering, and an RF sputtering. A coating layer of cobalt and its oxide, nitride or carbide, if intended, can be deposited, as described in Japanese Patent Application Laid-Open No. 8-296032, by applying DC power to a cobalt target in an inert gas atmosphere containing oxygen atom, nitrogen atom and carbon atom in the form of $O_2$, $N_2$, $CH_4$, etc.

In the production method of the present invention, the coating layer may be continuously formed by a dry plating or a combination of a plasma cleaning or etching with a dry plating while allowing a fiber material such as a fiber and a non-woven fabric each being made of a single filament or made of ten pieces or less of filaments which are not bundled together to create a space therebetween to run by pulling the fiber material in its cord direction.

Alternatively, such a continuous formation may be conducted by arranging with intervals a plurality of cords each being made of a single filament or made of ten pieces or less of filaments, and then subjecting the cords to a dry plating treatment or a combined treatment of a plasma cleaning or etching with a dry plating while allowing the cords to run continuously by pulling in the cord direction. In this method, it is preferable to arrange the fibers with intervals using a comb-shaped jig and treat the arranged fibers while allowing them to run by pulling in their axis direction. The intervals are provided so as to prevent the fibers from entangling and prevent a fiber from shading another during the application of electric field and irradiation of sputtered particles.

The continuous treatment of a plurality of fiber materials is preferable in view of production efficiency, and in a particularly preferred process 500 pieces or more of the fiber materials are simultaneously treated.

The properties of the fiber can be controlled by the tension during the running, in particular, the properties of an organic fiber which generate heat under plasma condition can be controlled as described below.

In the present invention, the coating layer may be formed by a dry plating treatment optionally after a plasma treatment while vibrating a short fiber filament on a stationary or running support. As the support for vibrating the short fiber filament, usable are a vibrating sample dish, a conveyer running with vibration, etc. The method for vibrating the short fiber filament to turn it on the support or change its position in the air is not specifically limited as far as the filament is uniformly coated.

Although the fibers with a coating layer formed by the dry plating as described above may be used as the rubber-reinforcing fiber in the production of rubber articles without any specific treatment, the fibers may be further processed to various forms according to the end use of rubber articles or rubber members by a method known in the fiber processing art, for example, by twisting, knitting, processing to short fibers and processing to nonwoven fabric. The form of the processed fibers may include, for example, multifilament cord, multimonofilament cord, cable, cord fabric, short fiber, nonwoven fabric and canvas.

To enhance the adhesion between the coating layer and the fiber material and the adhesion under wet heat conditions, the rubber-reinforcing fiber of the present invention may be provided with an undercoat between the fiber material and the coating layer. An organic film such as a coating film, aluminum, and a film of cobalt oxide having an oxidation state higher than that of the coating layer may be used as the undercoat in a thickness of 10 Å to 10 µm, preferably 20 Å to 1 µm.

The metal content of the coating layer can be controlled, for example, by changing the feeding amount of a reactive compound-containing gas with respect to the amount of an inert gas during the sputtering process. As described in, for example, Japanese Patent Application Laid-Open No. 10-286904, in the formation of a coating layer containing cobalt and cobalt oxide by sputtering a cobalt target in the presence of an inert gas such as argon, the value of k of $CoO_k$, wherein k is 0 to 1.8, particularly 0 to 1.6, can be adjusted by suitably selecting the mixing amount of an oxygen atom-containing gas such as oxygen, ozone, air and water.

The following provides a more detailed description about the rubber-reinforcing fiber of the present invention in the form of (A) a monofilament cord and (B) a short fiber.

(A) Rubber-reinforcing monofilament Cord

Although the rubber-reinforcing monofilament cord of the present invention is not specifically limited as far as it is made of an organic fiber material or a inorganic fiber material such as glass, preferred is a rubber-reinforcing monofilament cord which comprises a monofilament organic fiber material made of poly(ethylene terephthalate) or a polyester component mainly comprising poly(ethylene terephthalate) and a coating layer thereon containing the metal and/or its compound cited above.

More preferably, the monofilament organic fiber material is made of a polyester component containing 80% by weight or more of poly(ethylene terephthalate).

The polyester component other than poly(ethylene terephthalate), which may be optionally blended, is selected from poly(butylene terephthalate), poly(ethylene naphthalate), etc. A copolyester containing 10% by weight or less of a copolymerized component may be also usable. Examples of the copolymerized component include a dicarboxylic acid such as adipic acid, isophthalic acid, naphthalenedicarboxylic acid, and diphenyldicarboxylic acid; and a diol such as propylene glycol, butylene glycol, and diethylene glycol.

The polyester component may be added with a known additive such as a softening agent and a stabilizer in an amount not adversely affecting the effect of the invention, for example, 10% by weight or less.

It is preferable for the rubber-reinforcing monofilament cord of the present invention, when applied to a carcass cord of a pneumatic tire, to have an improved fatigue resistance sufficient for practical use against the cord breaking (fibrillation breaking) due to the compression stress applied to a bead turn-up portion during a high-load drum test.

To attain this, the rubber-reinforcing monofilament cord is preferred to meet all the following properties (a) to (g):

(a) Intrinsic viscosity (dl/g): 0.85 or higher,
(b) Birefringence: 0.17 or higher,
(c) Crystal orientation: 0.88 or higher,
(d) Density (g/cm$^3$): 1.32 or higher,
(e) Fineness (dtex): 1000 to 9000 ,
(f) Tenacity: 5.2 gf/dtex or higher, and
(g) Initial modulus: 42 gf/dtex or higher.

(a) The intrinsic viscosity is preferably 0.90 dl/g or higher, more preferably 0.96 dl/g or higher, because the resistance to fibrillation peeling and the adhesion to rubber increase with increasing intrinsic viscosity to improve the mechanical fatigue resistance. Although the upper limit is not critical, the intrinsic viscosity is preferably 1.2 dl/g or less for practical use to show a sufficient mechanical strength.

If the intrinsic viscosity is lower than 0.85 dl/g, the coating layer is likely to peel and remain in rubber or the peeling is likely to advance into the inside to cause the cord breaking in a general adhesion test which includes the steps of embedding a rubber-reinforcing polyester monofilament cord into rubber, vulcanizing the rubber, and then pulling the cord out of the rubber using a tensile tester.

The intrinsic viscosity was measured at 30°C on a 0.5 wt % solution of the rubber-reinforcing monofilament cord in a p-chlorophenol/tetrachloroethane mixed solvent (3:1 by weight) using an automatic IV measuring apparatus AVS500 (trade name) manufactured by Scott Co., Ltd. The intrinsic viscosity of the monofilament cord can be controlled, for example, by changing the conditions for solid-phase polymerization of the monofilament organic fiber material prior to spinning, the conditions for melt-spinning, etc.

Since the fatigue property largely differs depending on the amorphous orientation even when the cords have the same intrinsic viscosity, the amorphous orientation is controlled preferably in the range of about 0.40 to 0.20. The deformation due to the strain repeatedly applied to the cord is concentrated in the movable amorphous region to form internal cracks which act as the starting point for the fibrillation. However, it is presumed that the occurrence of internal cracks can be reduced by treating a rubber-reinforcing monofilament cord so as to reduce its amorphous orientation, because the orientation distribution of amorphous molecules becomes uniform and the cord is made more flexible.

(b) The birefringence is preferably 0.185 or higher, more preferably 0.187 or higher.
(c) The crystal orientation is preferably 0.93 or higher, more preferably 0.94 or higher.
(d) The density is preferably 1.40 g/cm$^3$ or higher, more preferably 1.402 to 1.410 g/cm$^3$.

Namely, to obtain a rubber-reinforcing polyester monofilament cord with a high tenacity and a high fatigue resistance, it is effective to create the contrastive orientations, i.e., a higher molecular orientation of the crystalline region and a lower molecular orientation of the amorphous region.

Such a fine structure of the monofilament with a high tenacity and a high fatigue resistance can be attained by optimizing the spinning conditions of the organic fiber material as a raw fiber, and in some cases, the dry-plating conditions. Namely, in the production of the raw fiber, a fiber before subjected to a relaxation treatment is heat-set under high tension for a relatively long term so as to reach a density of 1.390 g/cm$^3$ or higher by heating at a high temperature (for example, non-contact heating so that the surface temperature of the monofilament reaches 220 to 260°C) enough to allow the high molecular orientation region to crystallize sufficiently. This treatment is important not only for increasing the crystal orientation and crystallinity, but also for reducing the structural unevenness in the cross-section of the monofilament. Since the formation of such fine structure of the monofilament is limited in the steps after the step for producing the raw fiber, it is particularly important to form the fine structure during the production of the raw fiber.

In the dry plating process (including the plasma cleaning), the monofilament sometimes reaches a high temperature by its heat generation when treated under a usual plasma condition for a long term. Particularly, when the monofilament reaches 220°C or higher which is close to the melting point of poly(ethylene terephthalate), the growth of the crystalline region is promoted and the crystal orientation becomes higher to make the amorphous orientation relatively lower. In addition, a low tension during the dry plating raises the relaxation degree and the orientation of the amorphous region is lowered. Since the orientations of the crystal region and the amorphous region becomes more contrast, the tension during the dry plating is preferably as low as possible. However, since the orientations affect the final modulus (intermediate elongation) and elongation at break of the rubber-reinforcing cord, the conditions for tension should be determined according to the service conditions of a tire.

(e) The fineness of the monofilament is preferably 1000 to 9000 dtex, more preferably 2000 to 5000 dtex as in the usual twisted cords when used as a carcass material for a pneumatic tire.

To improve the fatigue resistance while ensuring the advantageous properties of the monofilament at its use, the monofilament has, in addition to the requirements (a) to (e), (f) a tenacity of 5.2 gf/dtex or higher and (g) an initial modulus of 42 gf/dtex or higher, preferably (f) a tenacity of 5.2 gf/dtex or higher and (g) an initial modulus of 63 gf/dtex or higher, and more preferably (f) a tenacity of 6.3 gf/dtex or higher and (g) an initial modulus of 63 gf/dtex or higher, because a low initial tenacity increases the tendency of cord breaking even when good in the fatigue resistance. The upper limit of the initial modulus is practically about 63 to 108 gf/dtex, although not specifically limited thereto.

The cross-sectional shape of the rubber-reinforcing monofilament cord is, although not specifically limited, preferably circular or elliptical because the stress due to bending of the cord, etc. is not concentrated on a specific portion to enhance the fatigue resistance of the fiber material, and the unevenness of treatment can be reduced in the plasma cleaning and the dry plating.

Although the rubber-reinforcing monofilament cord can be used without further processing, it may be processed by twisting, etc., because such a twist processing may further improve the fatigue resistance of the fiber.

The rubber-reinforcing monofilament cord of the present invention can be used as a carcass material of a pneumatic tire. For example, the rubber-reinforcing monofilament cord of the present invention is suitable as a carcass ply cord to be disposed in the radial direction of a pneumatic tire which comprises, for example, a tread portion, a pair of sidewall portions connected to both lateral sides of the tread portion, a pair of bead portions provided inside of each sidewall portion, and a carcass ply, and which is reinforced with a belt layer surrounding the carcass ply and embedded inside of the tread portion.

The rubber-filament cord composite of the present invention can be produced by a calendering method, etc., and is useful as a reinforcing material for a pneumatic tire such as, in addition to a carcass material, a belt cord material, a cap material, a layer material, and an insert material to be inserted into tier portions for reinforcement.

(B) Rubber-reinforcing Short Fiber

The rubber-reinforcing short fiber of the present invention is obtained by processing the rubber-reinforcing fiber into short fibers and used as filament chips for rubber articles such as tires.

When the rubber-reinforcing short fiber is made of a high-melting, high-modulus organic fiber material, an excellent interfacial adhesion between fiber and rubber is obtained. In addition, since the sticking between the short fibers due to adhesive treatment of the fiber material and the entanglement of the short fibers due to frictional electricity rarely occur, the short fiber is advantageous in workability. Further, the short fiber is excellent in quality maintenance of products because the reduction in the fatigue resistance during the use of rubber articles due to an insufficient dispersion of the short fiber for reinforcing the rubber articles is minimized.

As the organic fiber material for the rubber-reinforcing short fiber of the present invention, usable is an organic short fiber such as, as mentioned above, a fiber made of polyester, polyamide, poly(vinyl alcohol), acrylic polymer, polyolefin, polyimide, poly(phenylene sulfide), poly(olefin ketone), poly(ether ether ketone) or polybenzazole, and a viscose fiber. Of these fibers, preferred is an organic short fiber having a melting point of 130°C, the initiating temperature of sulfur-vulcanization, or higher, particularly 180°C or higher, because the sticking between the short fibers can be avoided and the resistance to adhesion loss is more excellent. The above short fibers may be used singly or in combination of two or more. As the inorganic fiber material, usable is an inorganic short fiber such as a ceramic fiber, a glass fiber, a carbon fiber, a rock fiber and a slag fiber.

The rubber-reinforcing short fiber can be produced, for example, by a method in which 1 to 10 pieces of continuous fibers is subjected to a dry-plating treatment to form a coating layer, and then the resultant fiber or fibers are made into short fibers by cutting; a method in which a coating layer is formed on a non-twisted fiber aggregate such as a glass mat, and then the resultant glass mat is cut into short fibers; or a method in which a dry-plating treatment is effected on short fibers while keeping the short fibers moving on a vibrating sample dish.

The rubber-reinforcing short fiber of the present invention can be used, for example, as a bead filler material of a pneumatic tire.

More specifically, the rubber-reinforcing short fiber of the present invention is suitable as a short fiber to be incorporated into a bead filler of a pneumatic tire which has a bead wire disposed in a bead portion; a carcass ply which comprises a rubber-coated cord layer made of a plurality of parallel cords, each end of the carcass ply being turned up at the bead portions and fixed to the bead portion; and a bead filler disposed radially outward from the bead wire.

The short fibers in the bead filler can be oriented to some extent by the extrusion or sheeting after a rubber kneading process. For example, the short fibers can be disposed so as to orient to a direction substantially perpendicular to the radial direction. The radial direction referred to herein is the direction substantially parallel to the cords in a carcass layer of a radial tire.

The length of the short fiber is not specifically limited. When intended to reinforce rubber by the short fibers, the length is preferably 100 mm or less, more preferably 5 to 100 mm, and most preferably 8 to 70 mm.

A fiber length exceeding 100 mm is not preferable, because fibers are entangled in compounding the fibers into rubber in the production of rubber articles, thereby making the control for orienting the short fibers to the radial ply direction, etc. difficult.

Although depending on the material for the short fiber, an excessively short fiber, for example a fiber of less than 5 mm long, is not suitable, because the fiber fails to retain the strength required for a reinforced rubber layer, and therefore, becomes less effective as the rubber-reinforcing fiber.

The maximum diameter of the short fiber is preferably 0.0001 to 0.8 mm, more preferably 0.001 to 0.5 mm. A fiber with a maximum diameter of less than 0.0001 mm increases production costs and is industrially disadvantageous. A maximum diameter exceeding 0.8 mm is not preferable, because the workability for cutting fibers into short fibers becomes less efficient owing to its large diameter to result in increased production costs.

Although the cross-sectional shape of the short fiber is not specifically limited, a cross-sectional shape with little peripheral roughness is preferred, as described above.

The rubber-fiber composite of the present invention is produced by a kneading method, a sheeting method, etc., and can be used as, in addition to the bead filler material, a material to be incorporated into a tread member, a base rubber member, a side-reinforcing rubber member, an insert member of a pneumatic tire.

The kneading and the sheeting may be conducted according to a known rubber-kneading technique, for example, by uniformly mixing the short fibers and a matrix rubber in Banbury mixer and then extruding the resultant rubber compound or sheeting the resultant rubber compound by a sheeting roll.

The content of the short fiber is preferably 4 to 70% by weight, more preferably 20 to 45% by weight based on the total weight of the short fiber and the rubber composition. When the content is less than 4% by weight, the resultant composite possibly fails to show a stiffness required for the reinforcing rubber layer, because the dispersion of the short fibers is hardly kept uniform. A content exceeding 70% by weight is not preferable in view of the tire endurance, because the excessively high fiber content of the rubber-fiber composite is likely to reduce the endurance.

The rubber article of the present invention is produced, for example, by laminating a rubber component on the rubber-reinforcing fibers, and then, vulcanizing the rubber component.

As the rubber component for the rubber article, for example, a natural rubber (NR) and a synthetic rubber having a carbon-carbon double bond can be used singly or in combination of two or more.

Examples of the synthetic rubber include a polyisoprene rubber (IR), a polybutadiene rubber (BR), and a polychloroprene rubber each being a homopolymer of a conjugated diene compound such as isoprene, butadiene and chloroprene; a styrene-butadiene copolymer rubber (SBR), a vinylpyridine-butadiene-styrene copolymer rubber, an acrylonitrile-butadiene copolymer rubber, an acrylic acid-butadiene copolymer rubber, a methacrylic acid-butadiene copolymer rubber, a methyl acrylate-butadiene copolymer rubber, and a methyl methacrylate-butadiene copolymer rubber each being a copolymer of the above conjugated diene compound and a vinyl compound such as styrene, acrylonitrile, vinylpyridine, acrylic acid, methacrylic acid, alkyl acrylate and alkyl methacrylate; a copolymer of a diene compound and an olefin such as ethylene, propylene and isobutylene, for example, an isobutylene-isoprene copolymer rubber (IIR); a copolymer of an olefin and a non-conjugated diene (EPDM) such as an ethylene-propylene-cyclopentadiene terpolymer, an ethylene-propylene-5-ethylidene-2-norbornene terpolymer, and an ethylene-propylene-1,4-hexadiene terpolymer; a halogenated product of the above rubber such as a halogenated isobutylene-isoprene copolymer rubber (Cl-IIR) and a brominated isobutylene-isoprene copolymer rubber (Br-IIR); and a ring-open polymer of norbornene.

The synthetic rubber cited above may be blended with a saturated elastomer such as a polyalkenamer (for example, polypentenamer) obtained by the ring opening polymerization of a cycloolefin; a rubber obtained by the ring opening polymerization of oxirane ring (for example, a sulfur-vulcanizable polyepichlorohydrin rubber); and a poly(propylene oxide) rubber.

The rubber composition used in the present invention may contain sulfur, an organic sulfur compound or another cross-linking agent preferably in an amount of 0.01 to 10 parts by weight, more preferably 1 to 5 parts by weight based on 100 parts by weight of the rubber component. Also, a vulcanization accelerator may be compounded with 100 parts by weight of the rubber component preferably in an amount of 0.01 to 10 parts by weight, more preferably 0.5 to 5 parts by weight. Although the vulcanization agent is not specifically limited, the use of dibenzothiazyl sulfide (DM) or diphenylguanidine (D) can reduce the vulcanization time.

The rubber composition used in the present invention may further added with an oil such as a mineral oil and a vegetable oil. The examples of the mineral oil include paraffin oil, naphthenic oil, aromatic process oil, ethylene-α-olefin co-oligomer, paraffin wax, and liquid paraffin. The examples of the vegetable oil include castor oil, cotton seed oil, linseed oil, rapeseed oil, soy bean oil, palm oil, coconut oil, and peanut oil. The compounding amount of the oil is preferably 3 to 70 parts by weight based on 100 parts by weight of the rubber component. An excessively small amount tends to lower the wet heat adhesion, whereas the abrasion resistance of rubber is possibly lowered when excessively large.

The rubber composition used in the present invention may further contain, according to its purpose and end use, a compounding additive generally used in the rubber art, for example, a filler such as carbon black, silica, calcium carbonate, calcium sulfate, clay and mica; a vulcanization aid such as zinc white and stearic acid; an antioxidant; a adhesion accelerator comprising a metal salt of organic acid such as an organic cobalt salt.

When the coating layer of the rubber-reinforcing fiber does not contain cobalt, it is preferred for further improving the initial adhesion and the resistance to adhesion loss to compound the adhesion accelerator such as a salt of organic acid with the rubber composition. The salt of organic acid is preferably a cobalt salt of an organic acid which may be saturated, unsaturated, linear or branched and may include neodecanoic acid, stearic acid, naphthenic acid, rosin, talloleic acid, oleic acid, linoleic acid, and linolenic acid. When the metal is polyvalent, the organic acid can be partially replaced by a compound containing boron or boric acid.

The composite of the rubber composition and the fiber material is produced by heat pressing the rubber composition to the fiber material, and then vulcanizing the rubber component to bond it to the fiber material. The vulcanization is conducted by a sulfur vulcanization and an organic sulfur vulcanization using an organic sulfur compound such as dithiomorpholine and a thiuram compound under known conditions. Particularly, the sulfur vulcanization is preferable. The compounding amount of sulfur or the organic sulfur compound in terms of sulfur therein is preferably 0.5 to 8 parts by weight, more preferably 1 to 6 parts by weight based on 100 parts by weight of the rubber component.

When the coating layer of the rubber-reinforcing fiber of the present invention contains cobalt, it is preferred to reduce the compounding amount of sulfur, for example, to 0.5 to 6 parts by weight, particularly 1 to 3.8 parts by weight based on 100 parts by weight of the rubber component.

The rubber article of the present invention includes, not the purpose for limitation, a rubber composite member such as a tire, a power-transforming belt, a conveyer belt, and a hose in which the fiber material used as the core material, a rubber vibration isolator, a vibration damper, a rubber crawler, a rubber screen and a rubber roll.

The present invention will be described in further detail by way of the following examples and comparative examples. However, it should be noted that the scope of the present invention is not limited thereto.

In the examples and comparative examples, the following materials were used as the raw material for the rubber-reinforcing fibers.

[Organic Fiber Material F]

The following monofilaments, or the following cords and multifilaments prepared by twisting ten pieces or less of filaments, shown as F-1 to F-18, were used as the organic fiber materials.

(F-1) Poly(ethylene terephthalate) monofilament

Material: 100% poly(ethylene terephthalate)
Cross section: circular
Fineness: about 3340 dtex
Melting point: about 265°C

(F-2) Poly(ethylene terephthalate) multimonofilament

Prepared by twisting three pieces of the poly(ethylene terephthalate) monofilament F-1.

(F-3) Commercially available poly(ethylene terephthalate) monofilament

Fineness: 100 D
Melting point: about 265°C

(F-4) Twisted cord made of commercially available poly(ethylene terephthalate) yarn

Prepared by twisting two pieces of poly(ethylene terephthalate) yarn manufactured by Toyobo Co. Ltd. (Nominal fineness: 1670 dtex, Number of filament: 380, Melting point: about 265°C) in a primary twist number of 40 turns/10 cm and a final twist number of 40 turns/10 cm. The total fineness of the resultant twisted cord was 3340 dtex.

(F-5) Wholly aromatic polyester (polyarylate) monofilament

Polyarylate monofilament (trade name: Vecry T-102, polyarylate fiber) manufactured by Kuraray Co. Ltd.

Melting point: about 270°C
Nominal fineness: 21 dtex
Single fiber diameter: 45 μm

(F-6) Aliphatic polyamide monofilament

Commercially available nylon fishing gut of No. 0.6 count.

Melting point: 225°C or above
Nominal standard diameter: 0.125 mm

(F-7) Aromatic polyamide monofilament

Para-bonding polyaramide monofilament (trade mark: Technola) manufactured by Teijin Corporation.

Nominal fineness: 100D
Nominal single fiber diameter: 100 μm
Melting point: 300°C or above

(F-8) Poly(vinyl alcohol) monofilament

Cross-sectional shape: circular
Single fiber diameter: 120 μm
Melting point: 191°C

(F-9) Acrylic monofilament

Cross-sectional shape: circular
Single fiber diameter: 10 μm
Softening point: 190 to 200°C

(F-10) Polyolefin monofilament

Cross-sectional shape: circular
Fineness: 20 dtex
Melting point: about 165°C

(F-11) Polyimide monofilament

Cross-sectional shape: circular

Single fiber fineness: 11 dtex
Melting point: about 410°C

(F-12) Poly(phenylene sulfide) monofilament

Poly(phenylene sulfide) monofilament manufactured by foray Monofilament Co., Ltd.

Melting point: about 285°C
Fiber diameter: 0.2 mm

(F-13) Poly(ether ether ketone) monofilament

Cross-sectional shape: circular
Fineness: 20 dtex
Melting point: about 165°C

(F-14) Polybenzazole monofilament

Monofilament drawn from polybenzoxazole fiber (trade name: Zylon HM, Nominal fineness: 545 dtex, Number of filaments: 332, Single fiber fineness: about 1.7 D, Heat-resistance limit: 650°C) manufactured by Toyobo Co., Ltd..
(F-15) Phenol fiber monofilament
Phenol fiber (trade name: KF-1010) manufactured by Nippon Kainol Co., Ltd.

Nominal fineness: 10 D
Nominal fiber diameter: 33 $\mu$m
Heat resistance: 210 to 230°C/2 hr

(F-16) Viscose fiber monofilament

Monofilament drawn from a rayon fiber (trade name: Cordenka 700, Nominal fineness: 1840 dtex, Number of filaments: 1000, Decomposition temperature: 200 to 300°C) manufactured by Acordis Co., Ltd.

(F-17) Solvent-spun cellulose fiber monofilament

Monofilament drawn from a cellulose fiber (trade name: Lyocell, Fineness: 1.3 D, Decomposition temperature: 200 to 300°C) manufactured by Acordis Co., Ltd.

[Inorganic Fiber Material I]

The following monofilaments, or the following cords and multifilaments prepared by twisting ten pieces or less of filaments, shown as I-1 to I-6 were used as the inorganic fiber materials.

(I-1) Carbon fiber monofilament

Monofilament drawn from a pitch-based carbon fiber (trade name: Dialead K661, Single fiber diameter of 17 $\mu$m, Fiber length of 18 mm, Heat resistance limit of 400°C or higher) manufactured by Mitsubishi Chemical Corporation.

(I-2) Alumina fiber monofilament

Monofilament drawn from an alumina fiber (trade name: Nextel 312, Chemical composition: 62% $Al_2O_3$, 24% $SiO_2$ and 24% $B_2O_3$, Nominal single fiber diameter: 10 to 12 $\mu$m, Number of filaments: 740 to 780, Heat resistance limit: 1200°C) manufactured by Sumitomo 3M Limited.

(I-3) Tyranno fiber monofilament

Monofilament drawn from Tyranno fiber (trade name: Tyrannohex, Chemical composition: 48-57% Si, 30-32% C, 2% Ti, 4-18% O, and less than 0.1% B, Nominal single fiber diameter: 8.5 $\mu$m, Number of filaments: 1600, Nominal fineness: 2200 dtex, Heat resistance limit: 1400°C or higher) manufactured by Ube Industries, Ltd.

(I-4) Glass fiber monofilament

Monofilament drawn from a glass fiber (trade name: Yarn YECG 37 1/0, Glass material: E glass, Nominal chemical composition: 52-56% Si, 12-16% $Al_2O_3$, 16-25% CaO, 0-6% MgO, 5-13% $B_2O_3$) and 0-0.8% $Na_2O$ + $K_2O$, Nominal single fiber diameter: 9 $\mu$m, Softening point: 840°C or higher) manufactured by Nippon Sheet Glass Company, Limited.

(I-5) Non-bundled glass fiber aggregate

A glass mat (trade name: Surface Mat CFG 08, Glass material: E glass, Nominal chemical composition: 52-56% Si, 12-16% $Al_2O_3$, 16-25% CaO, 0-6% MgO, 5-13% $B_2O_3$, and 0-0.8% $Na_2O$ + $K_2O$, Nominal single fiber diameter: 9 $\mu$m, Average thickness: 0.8 mm, Softening point: 840°C or higher) manufactured by Nippon Sheet Glass Company, Limited.

(I-6) Glass short fiber

A chopped strand (trade name: ECS12, Glass material: E glass, Nominal chemical composition: 54.4% Si, 14.3% $Al_2O_3$, 21.3% CaO, 0.5% MgO, 7.6% $B_2O_3$, 0.5% $Na_2O$ + $K_2O$, 0.3% $TiO_2$, and 0.6% $F_2$, Strand length: 12 mm, Single fiber diameter: 10-24 $\mu$m, Softening point: 840°C or higher) manufactured by Central Glass Co., Ltd.

[Dry Plating Material M]

The following metal targets M-1 to M-6 and the gaseous sources M-7 and M-8 were used as the dry plating materials.

(M-1) Cobalt target

Commercially available cobalt sputtering target.

(M-2) Copper target

Commercially available copper sputtering target.

(M-3) Zinc target

Commercially available zinc sputtering target.

(M-4) Titanium target

Commercially available titanium sputtering target.

(M-5) Silver target

Commercially available silver sputtering target.

(M-6) Nickel target

Commercially available nickel sputtering target.

(M-7) Argon gas

High purity argon gas manufactured by Taiyo Toyo Sanso Co., Ltd. (product number: Argon 01003).

(M-8) Oxygen gas

High purity oxygen gas manufactured by Taiyo Toyo Sanso Co., Ltd. (product number: Oxygen 01003).

[Rubber Composition G]

The following rubber compositions G-1 and G-2 were used for the rubber materials for producing the rubber articles.

(G-1) Non-vulcanized rubber composition of the formulation G-1 shown in Table 1.

(G-2) Non-vulcanized rubber composition of the formulation G-2 shown in Table 1.

Table 1

| (part by weight) | | |
|---|---|---|
| | G-1 | G-2 |
| Natural rubber | 80 | 100 |
| Styrene-butadiene copolymer rubber | 20 | - |
| Carbon black[1] | 40 | 70 |
| Stearic acid | 2 | 2 |
| Petroleum softening agent | 10 | 8 |
| Pine tar | 4 | - |
| Zinc white | 5 | 8 |
| Antioxidant: Nocrac 224[2] | 1.5 | - |
| Antioxidant: Nocrac 6C[3] | - | 1.5 |
| Vulcanization Accelerator: Nocceler DM[4] | 0.75 | - |
| Vulcanization Accelerator: Nocceler D[5] | 0.75 | - |
| Vulcanization Accelerator: Nocceler MSA[6] | - | 1 |
| Organic cobalt | - | 1 |
| Sulfur | 2.5 | 5 |

[1] HAF (High Abration Furnace) carbon black

[2] Polymerized 2,2,4-trimethyl-1,2-dihydroquinoline manufactured by Ouchi Sinko Chemical Industrial Co., Ltd.

[3] N-(1,3-Dimethylbutyl)-N'-phenyl-p-phenylenediamine manufactured by Ouchi Sinko Chemical Industrial Co., Ltd.

[4] Dibenzothiazyl disulfide manufactured by Ouchi Sinko Chemical Industrial Co., Ltd.

[5] Diphenylguanidine manufactured by Ouchi Sinko Chemical Industrial Co., Ltd.

[6] N-Oxydiethylene-2-benzothiazole sulfenamide manufactured by Ouchi Sinko Chemical Industrial Co., Ltd.

The following provides preparation examples of the organic fiber materials.

PREPARATION EXAMPLE 1

Poly(ethylene terephthalate) monofilament F-1

PET chips, raw material for monofilament, having an intrinsic viscosity of 0.6 dl/g were solid-phase polymerized at 240°C in vacuum to increase the polymerization degree until reaching a desired intrinsic viscosity level. The resultant chips were introduced into a screw melt extruder from a hopper kept under nitrogen atmosphere, and then, melted therein. The molten PET was extruded from a circular nozzle at a spinning temperature of 305°C at a constant rate kept by a gear pump. The extrudate was allowed to pass through an air gap and led to a water cooling bath disposed 70 cm below the nozzle, where the extrudate was rapidly quenched to solidify. After removing the water, the solidified product was wound on a bobbin as a non-drawn fiber. The non-drawn fiber was then drawn in two-stage manner by a drawing machine of a different process line, while changing the draw ratio from sample to sample within a total draw ratio of 5.4 to 6.8. During the first- and second-stage drawing, the fiber was heated by a non-contact electric heater.

PREPARATION EXAMPLE 2

Poly(ethylene terephthalate) multifilament F-2

A poly(ethylene terephthalate) multimonofilament was prepared by twisting the poly(ethylene terephthalate) monofilaments of Preparation Example 1 at 25 turns/10 cm by a twisting machine.

Preparation Example 3

Poly(vinyl alcohol) monofilament F-8

A 40% poly(vinyl alcohol) (PVA) solution in dimethyl sulfoxide (DMSO) was prepared by dissolving PVA (vinyl alcohol unit:81 mol%, vinyl acetate unit: 19 mol%, polymerization degree: 600, saponification degree: 80 mol%) in DMSO under stirring at 90°C for 12 hours in a reduced nitrogen atmosphere of 100 Torr or lower. The solution was extruded from an extruder kept at 90°C through a nozzle of 0.55 mm diameter and drawn in an acetone/DMSO mixture (95/5 by weight) kept at 2°C. By removing the remaining DMSO by extraction into hot acetone and drying at 80°C by a hot-air drier, a PVA monofilament having a single fiber diameter of 120 μm and the melting point of 191°C was obtained.

Preparation Example 4

Acrylic monofilament F-9

A 9 wt % polymer solution was prepared by dissolving a polymer consisting of 95 mol% acrylonitrile unit and 5 mol% methyl acrylate unit into a 60 wt % dense aqueous solution of zinc chloride. The solution was pressed into a 25 wt % aqueous solution of zinc chloride through a nozzle having 12,000 holes of 0.06 mm diameter. The strands were drawn 2.5 times during the washing with water for removing the solvent, dried, and re-drawn 5 times in a saturated steam at 105°C, thereby obtaining acrylic multifilament having a single fiber diameter of 10 μm. The acrylic monofilament was obtained by drawing a desired amount from the multifilament.

PREPARATION EXAMPLE 5

Polypropylene monofilament F-10

A relatively high molecular weight polypropylene having an intrinsic viscosity [η] of 6.0 dl/g was extruded at a resin temperature of 230°C from a plunger extruder equipped with a spinning nozzle of 1.0 mm diameter. The molten extrudate was allowed to pass through a 80 cm air gap and wound on a bobbin in 25°C air at a draft ratio of 93, thereby obtaining a raw fiber. As the process stabilizer, 3,5-di-tert-butyl-4-hydroxytluene and tetrakis[methylene-3-(3,5-di-tert-butyl-4-hydroxyphenylene)propionate]methane was added in an amount of 0.1 % by weight based on the high molecular weight polypropylene. The raw fiber was subjected to a single-stage drawing at 150°C and a draw ratio of 4.5 times in a drawing box (50 cm long) having a pair of godet rolls, thereby obtaining a polypropylene monofilament having a single fiber fineness of 20 dtex.

PREPARATION EXAMPLE 6

Polyimide monofilament F-11

Polyimide chips (NEW-TPI produced by Mitsui Toatsu Chemicals, Inc.) were dried in a hot-air drier at 250°C for 15 hours. The dried chips were melted, extruded from a spinning nozzle having 48 discharge holes at an extrusion output of 60 g/min, and wound up at a speed of 1000 m/min while coating with an oil agent when solidified by cooling, thereby obtaining a multifilament of a fineness of 540 D containing 48 pieces of filaments. A desired amount of monofilament was obtained by drawing from the multifilament.

PREPARATION EXAMPLE 7

Poly(ether ether ketone) monofilament F-13

Poly(phenylene ether ether ketone) having an intrinsic viscosity of 0.96 dl/g (PEEK produced by Victrex Manufacturing Limited) was melted at 400°C and extruded from a spinneret having spinning nozzles of 2.5 mm diameter at an extrusion output of 21 g/min. The extrudate was allowed to pass through a 30 cm heating tube of an atmospheric temperature of 150°C disposed below the spinneret, cooled by passing through a 40°C warm water bath of 40 cm deep, and wound up at a speed of 45 m/min. The resultant non-drawn fiber was drawn 2.9 times in a non-contact heater (dry-heating bath) at 325°C, heat-treated for relaxation in a non-contact heater (dry-heating bath) at 325°C, and wound up on a bobbin, thereby obtaining a poly(ether ether ketone) monofilament having a single fiber diameter of 0.4 mm.

The following provides examples of the production of rubber-reinforcing fibers. In Examples 1 to 27 and Comparative Examples 2 to 20, the rubber-reinforcing fibers were produced by a non-continuous treating method, and produced in Examples 28 to 30 and Comparative Examples 21 to 23 by a continuous treating method.

The thickness and the cobalt metal content of the coating layer of the rubber-reinforcing organic fibers were determined by the following methods. Thickness of Coating Layer

Determined by the elemental proportion in the depth direction measured by ESCA.

Cobalt Metal Content

Determined by the elemental proportion in the depth direction measured by ESCA.

EXAMPLES 1 to 25

Production of rubber-reinforcing short fibers by non-continuous treatment

Respective fiber materials shown in Tables 2 to 5 were fixed to a holder (jig for fixing arranged fibers at a fixed length) of a magnetron sputtering apparatus, and subjected to a vacuum plasma cleaning at a high frequency of 13.56 MHz and an electric power of 100 W for five minutes while feeding respective gas shown in Tables 2 to 5.

After cleaning, a coating layer was formed on each fiber material by sputtering each target shown in Tables 2 to 5 by applying an electric field to the target at a direct-electric power of 300 W while feeding argon gas at 18 ml/min and optionally oxygen gas at 1 ml/min (only Examples 2 and 3), thereby producing respective rubber-reinforcing organic fibers.

The coating layer was formed by a first one-minute dry plating and a subsequent second one-minute dry plating after rotating the holder by 180° so as to oppose the shaded side to the target, thereby forming the coating layer uniformly on the fiber surface. The thickness (maximum thickness and minimum thickness) and the metal content (atm %) of the coating layer are shown in Tables 2 to 4.

The resultant rubber-reinforcing organic fiber was cut into 9 mm to prepare rubber-reinforcing short fibers.

COMPARATIVE EXAMPLE 1

Production of rubber-reinforcing short fibers

The organic fiber material F-3 was cut into 9 mm without forming the coating layer to prepare rubber-reinforcing short fibers.

COMPARATIVE EXAMPLES 2 to 18

Production of rubber-reinforcing short fibers

Respective fiber materials shown in Tables 2 to 5 were fixed to a holder (jig for fixing arranged fibers at a fixed length) of a magnetron sputtering apparatus, and subjected to a vacuum plasma cleaning at a high frequency of 13.56 MHz and a power of 100 W for five minutes while feeding respective gas shown in Tables 2 to 5.

Then, the fibers were cut into 9 mm to prepare rubber-reinforcing short fibers.

EXAMPLE 26

Production of rubber-reinforcing short fiber from non-bundled fiber aggregate

The glass mat I-5 was fixed to a holder (jig for fixing arranged fiber aggregate material at a fixed length) of a magnetron sputtering apparatus, and subjected to a vacuum plasma cleaning at a high frequency of 13.56 MHz and an electric power of 100 W for five minutes while feeding a gas shown in Table 5. After cleaning, a coating layer was formed by sputtering a target shown in Table 5 for five minutes by applying an electric field to the target at a direct-electric power of 300 W while feeding argon gas at 18 ml/min, thereby producing a rubber-reinforcing inorganic fiber. The maximum thickness of the coating formed by dry plating was 1520 Å for the filaments at the front surface of the fiber aggregate and 1498 Å for the filaments at the back surface thereof.

The dry-plating treatment was repeated after disposing films on the front surface of the fiber aggregate and on the back surface of the fiber aggregate so that the film on the back surface can be dry-plated by plating particles passing through the fiber aggregate. The films were kept so that the film surface to be dry-plated was not 1 mm or more apart from the fiber aggregate. In the film disposed on the front surface, the maximum thickness of the coating was 1570 Å. In the film disposed on the back surface, the maximum thickness was 1520 Å and the minimum thickness was 272 Å.

After carrying out the treatment for forming the coating for one minutes, the holder was rotated by 180° so as to oppose the shaded side to the target, and then the dry plating was further carried out for four minutes, thereby forming the coating layer uniformly on both sides of the fibers. The thickness (maximum thickness and minimum thickness) of the coating layer formed on the fiber surface are shown in Table 5.

The resultant rubber-reinforcing fiber aggregate was cut into 9 mm to prepare rubber-reinforcing short fibers.

COMPARATIVE EXAMPLE 19

Production of rubber-reinforcing short fiber from non-bundled fiber aggregate

A glass mat I-5 was fixed to a holder (jig for fixing arranged fiber aggregate material at a fixed length) of a magnetron sputtering apparatus, and subjected to a vacuum plasma cleaning at a high frequency of 13.56 MHz and an electric power of 100 W for five minutes while feeding a gas shown in Table 5.

The resultant rubber-reinforcing fiber aggregate was cut into 9 mm to obtain rubber-reinforcing short fibers.

EXAMPLE 27

Production of rubber-reinforcing short fiber from short fiber material

The short fiber material I-6 was mounted on a sample dish disposed in a magnetron sputtering apparatus, and subjected to a vacuum plasma cleaning at a high frequency of 13.56 MHz and an electric power of 100 W for five minutes while feeding a gas shown in Table 5. During the cleaning treatment, the sample dish holding the short fiber material was vibrated so as to keep the short fiber moving, thereby ensuring a uniform cleaning of the surface of the short fiber material. Thereafter, a coating layer was formed by sputtering a target shown in Table 5 by applying an electric field to the target at a direct-electric power of 300 W while feeding argon gas at 18 ml/min, thereby producing a rubber-reinforcing inorganic fiber. During the sputtering treatment, the sample dish holding the short fiber material was also vibrated to carry out the dry plating for two minutes while keeping the short fiber material moving, thereby forming the coating uniformly on the surface of the short fiber material. The thickness (maximum thickness and minimum thickness) of the coating formed on the fiber surface is shown in Table 5.

COMPARATIVE EXAMPLE 20

Production of rubber-reinforcing short fiber from short fiber material

The short fiber material I-6 was mounted on a sample dish disposed in a magnetron sputtering apparatus, and subjected to a vacuum plasma cleaning at a high frequency of 13.56 MHz and an electric power of 100 W for five minutes while feeding a gas shown in Table 5. During the cleaning treatment, the sample dish holding the short fiber material was vibrated so as to keep the short fiber moving, thereby ensuring a uniform cleaning of the surface of the short fiber material.

EXAMPLES 28 AND 29

Production of rubber-reinforcing polyester cord by continuous treatment

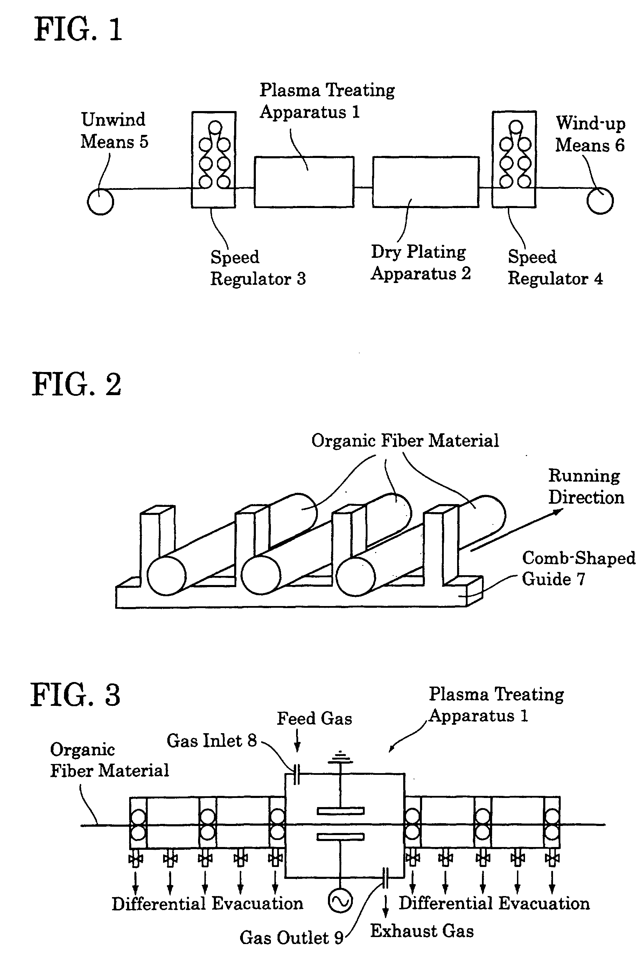

As shown in Fig. 1, a continuous treatment apparatus comprised a plasma treating apparatus 1 for continuously carrying out the plasma surface treatment while gradually evacuating the apparatus by differential evacuation, a dry plating apparatus 2 for carrying out a continuously dry-plating while evacuating the apparatus by differential evacuation, speed regulators 3 and 4, each comprising a plurality of rolls, for regulating the running speed of a cord, an unwind means 5 for unwinding a rolled long fiber material, and a wind-up means 6.

A roll of each organic fiber material to be treated as shown in Table 6 was set to the unwind means 5. The unwound end portion of the organic fiber material was successively passed through the speed regulator 3, the plasma treating apparatus 1, the dry plating apparatus 2 and the speed regulator 4, and finally fixed to the wind-up means 6. Three pieces of the organic fiber material arranged in parallel were wound on the roll (see Fig. 2).

In addition, three pieces of the organic fiber material were set in parallel to be apart from each other at 0.5 mm or more intervals through a comb-shaped guide 7 so as to prevent the organic fiber materials from entangling with each other. The comb-shaped guide 7 was preferably disposed between the speed regulator 3 and the plasma treating apparatus 1, between the plasma treating apparatus 1 and the dry plating apparatus 2, and between the dry plating apparatus 2 and the speed regulator 4. The comb-shaped guide 7 was further disposed between the unwind means 5 and the speed regulator 3 and between the speed regulator 4 and the wind-up means 6, if necessary for preventing the cords from entangling in each apparatus.

The treating speed of the organic fiber material was regulated to 2 m/min by the speed regulator 4, and the tension during the treatment was regulated to $900 \pm 10$ g for individual cord by the speed regulator 3.

The plasma treating apparatus 1 comprised, as shown in Fig. 3, a chamber equipped with an entrance and an exit for the organic fiber materials, a gas inlet 8, and a gas outlet 9. In the chamber, a pair of opposing electrodes was disposed. The organic fiber materials arranged in parallel were allowed to continuously pass between the opposing electrodes. The treating chamber was evacuated, and the entrance portion and the exit portion for the organic fiber materials were gradually evacuated by differential evacuation to reduce the pressure. After the chamber was evacuated to a vacuum level sufficient for allowing plasma discharge, an electric field was applied between the opposing electrodes to generate a vacuum oxygen plasma, thereby continuously etching the surface of the fiber material.

The plasma etching treatment was carried out in oxygen atmosphere under a reduced pressure of 13.3 Pa by controlling the oxygen supply from the gas inlet 8 and the evacuation from the gas outlet 9. The opposing electrodes were parallel plate-type with an electrode width of 30 mm, an electrode length of 500 mm, and an interelectrode distance of 30 mm, which was disposed so that the running fiber materials did not contact the electrodes. The electric field, 13.56 MHz and 300 W, was applied to the opposing electrodes.

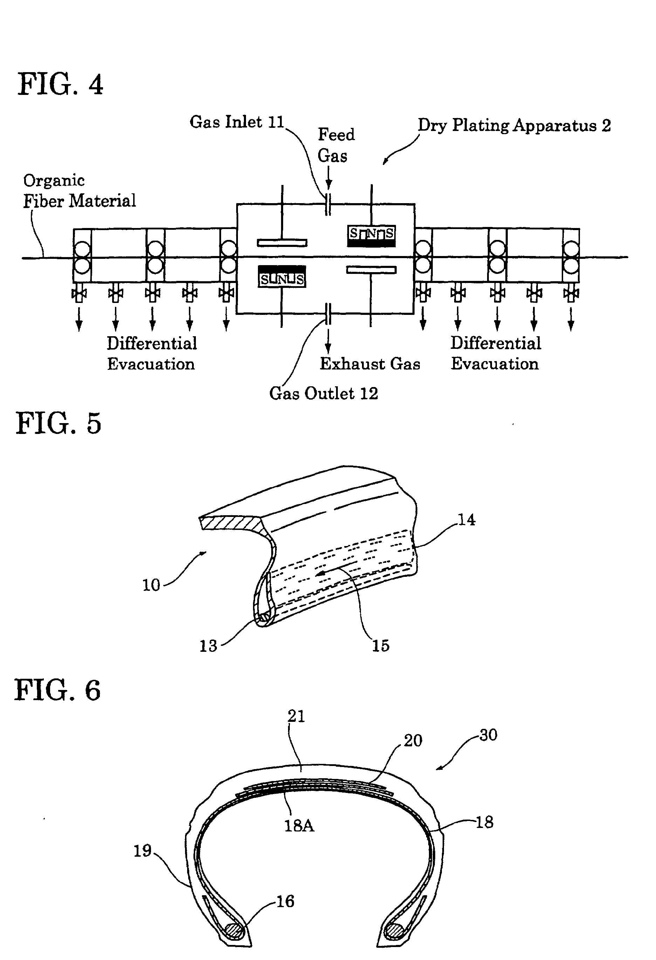

The dry plating apparatus 2 comprised, as shown in Fig. 4, a sputtering chamber capable of being gradually evacuated by a differential evacuation to a vacuum level sufficient for allowing plasma discharge and equipped with an entrance and an exit for organic fiber materials, a gas inlet 11, and a gas outlet 12. In the sputtering chamber, two pair of magnetron sputtering systems each comprising an opposing electrode and a cobalt target were disposed. The dry-plating treatment was effected by allowing the parallel organic fiber materials to pass between the opposing electrode and the cobalt target while applying an electric field to the magnetron sputtering systems under reduce pressure in a mixed gas atmosphere of argon and oxygen, there by producing a rubber-reinforcing polyester monofilament cord. The targets of the two magnetron sputtering systems were oppositely disposed with respect to the organic fiber materials running in parallel so that the sputtered particles deposit to the organic fiber materials form both sides.

The dry plating was conducted in a mixed gas atmosphere of argon and oxygen while supplying an argon-oxygen mixed gas (argon/oxygen = 18/1) from the gas inlet 11 and adjusting the chamber at 0.7 Pa by controlling the differential evacuation and the evacuation form the gas outlet 12. The opposing electrode and the target were parallel plate-type each being 100 mm wide and 500 mm long, and located with an electrode-target distance of 50 mm so that the running fiber materials did not contact the electrode or target. A direct-current electric field of 300 W was applied between the opposing electrodes.

EXAMPLE 30

Production of rubber-reinforcing organic fiber by continuous treatment

Three pieces of the rubber-reinforcing short fibers of Example 28 were twisted by a twister to a twisted cord having a twist number of 25 turns/10 cm.

COMPARATIVE EXAMPLES 21 to 23

Production of rubber-reinforcing polyester monofilament cord

A rubber-reinforcing polyester monofilament cord was produced in the same manner as in Examples 28 and 29 except for omitting the dry-plating treatment of the organic fiber materials.

Comparative Example 24

Production of rubber-reinforcing organic fiber by RFL adhesive treatment

Rubber-reinforcing organic fibers treated with a conventional RFL solution were produced by the following method. The adhesive treatment was conducted by a coating machine manufactured by Litzler Co. Ltd. using a dipping solution.

The dipping solution contained, per 1000.0 parts by weight, 14.9 parts by weight of resorcin, 19.0 parts by weight of a 37 mol% aqueous solution of formaldehyde, 18.2 parts by weight of a 10 mol% aqueous solution of sodium hydroxide, 190.5 parts by weight of vinylpyridine latex (JSR0650 produced by JSR Corporation), 195.4 parts by weight of styrene-butadiene copolymer latex (JSR2108 produced by JSR Corporation), and 562.0 parts by weight of soft water.

The dipping solution was prepared as follows. After dissolving resorcin into 372.5 g of soft water, a 10 mol% aqueous solution of sodium hydroxide was added under stirring, to which a 37 mol% aqueous solution of formaldehyde was further added. The resultant mixture was allowed to stand at 25°C for 6 hours for aging, thereby obtaining Solution A. Separately, Solution B was prepared by mixing latex with 189.5 of soft water. After adding Solution A to Solution B, the mixture was allowed to stand at 25°C for 24 hours for aging, thereby preparing a conventional RFL dipping solution. The RFL content was 16% by weight, the solid content was 18% by weight, and VP/(VP + SBR) was 7.5% by weight.

The organic fiber materials were dipped in the dipping solution, and exposed to heat in a dry zone at 150°C for 120 sec, and in first and second curing zones at 220 to 250°C for 40 sec, thereby producing the rubber-reinforcing organic fibers. To attain a 4% intermediate elongation under a tensile force of 2.25 g/D, the tension in the final zone was set to 0.85 kg, whereas suitably selected from the range of 0.4 to 1.7 kg in the other zones.

The rubber-reinforcing fibers of Examples 1 to 30 and Comparative Examples 1 to 20 were evaluated on the following properties.

(1) Adhesion strength of rubber-reinforcing short fiber (Examples 1-27 and Comparative Examples 1-20)

Each of the short fibers of Examples 1 to 27 and Comparative Examples 1 to 20 was kneaded with the non-vulcanized rubber composition G-2 in a Banbury mixer and rolled into sheet, which was then vulcanized at 155°C for 20 min under a pressure of 20 kgf/cm$^2$. After cooling to room temperature, the vulcanized sheet was die-cut to a dumbbell shape by DIN No. 3 die so that the lengthwise direction of the dumbbell specimen extends perpendicularly to the direction to which the short fibers were made oriented by the sheeting operation.

The dumbbell specimen was subjected to a fatigue treatment by repeating 200% elongation 1000 times at 30 Hz cycle using a uniaxial fatigue tester. The specimen was re-elongated by 200% and fixed to a jig. Then, the cutting surface resulted from the dumbbell cutting was observed under a scanning electron microscope to examine the interfacial peeling between the rubber and the short fibers. Based on the results of observation, the adhesion strength between the rubber and the short fibers at 200% elongation was ranked by the following standards. The results are shown in Table 2.

    A: No or substantially no peeling
    B: Slight peeling
    C: Peeling or break due to peeling

(2) Endurance of tire having bead filler reinforced by rubber-reinforcing organic short fiber (Example 1 and Comparative Example 1)

Each of the short fibers of Example 2 and Comparative Example 1 was kneaded with the non-vulcanized rubber composition G-2 in Banbury mixer, and rolled into sheet to prepare a short fiber-compounded rubber. A pneumatic tire 10 as shown in Fig. 5 was produced using the short fiber-compounded rubber as a bead filler 14. The pneumatic tire 10 was provided with a two-ply steel cord layer as a belt layer and a single-ply layer comprising 1670 D/2 poly(ethylene terephthalate) twisted cords (cord obtained by an adhesion treatment of the organic fiber material F-4 with RFL solution) as a carcass layer. Each tire had a size of 165/70R13, and the short fibers were oriented to the direction 15 which was in parallel to a bead wire 13, i.e., perpendicular to the radial direction.

To evaluate the durability of the short fiber-rubber adhesion in the bead filler 14 of the pneumatic tire 10, each end of the carcass ply was positioned near the bead filler 14 so that the bead filler 14 could be broken by the strain due to the stress during tire operation.

The tire 10 was fitted to a rim according to the method of JIS D 4230 §5.3.1. The tire endurance test was conducted by using the test machine of JIS D 4230 §5.3.2 according to the test method of JIS D 4230 §5.3.3. More specifically, after the third-stage of the test, the tire was continued to run while increasing the load by 10% every 24 hours, thereby determining the overall running distance until the tire was broken. The tire endurance is expressed by an index number taken the overall running distance of Comparative Example 1 as 100. The results are shown in Table 2. In addition, the broken portion of the tire was observed under a digital microscope (VH6300 manufactured by Keyence Corporation) to evaluate the short fiber adhesion of the bead filler during the tire endurance test. The results expressed by the following standards are shown in Table 2.

A: No or substantially no peeling between short fibers and rubber in bead filler rubber-fiber composite
B: Peeling or break due to peeling in bead filler rubber-fiber composite

(3) Peel strength of rubber-reinforcing polyester cord (Examples 28-30 and Comparative Examples 21-23)

Respective rubber-reinforcing polyester cords were embedded in a non-vulcanized rubber composition, which was then vulcanized at 155°C under 20 kgf/cm$^2$ for 20 min. After cooling to room temperature, the peel resistance was measured by pulling the cord out of the vulcanized rubber at a speed of 30 cm/min in an ambient atmosphere of $25 \pm 1°C$. The results are shown in Table 6 as the peel strength between the vulcanized rubber and the cord.

(4) Fiber properties of rubber-reinforcing polyester monofilament cord (Example 28 and Comparative Example 24)

The following properties (i) to (vii) of the rubber-reinforcing polyester monofilament cords of Example 28 and Comparative Example 24 were measured. In the fine structure analysis, however, a cord only subjected to, instead of the dry plating, the plasma treatment using no target was used. The results of the measurements are shown in Tables 6 and 7.

(i) Intrinsic viscosity (IV)

Measured in a p-chlorophenol/tetrachloroethane (3:1) mixed solvent at 30°C by using an automatic IV measuring apparatus manufactured by Scott Co. Ltd.

(ii) Birefringence Δn

The refractive indices in the axial direction and the direction perpendicular thereto of the sample fiber dipped in a refraction regulator produced by Nippon Chikagaku Co., Ltd. were measured by an interference microscope manufactured by Karl Zeis Co., Ltd. The birefringence was calculated by subtraction of the measured values. The refractive index of the dipping solution was measured by Abbe refractometer Model 4T manufactured by Atago Co., Ltd.

(iii) Orientation of crystalline region

Measured using a wide X-ray diffractometer and a computer soft available from Rigaku Denki Co., Ltd. The integral width of the peaks obtained by scanning the (010) face at β angle of 0 to 360 degree was computed. The crystalline orientation was obtained from the following equation:

$$\text{Crystalline orientation} = 1 - \Sigma(\text{Integral Width}) / 360.$$

(iv) Density

A sample and a glass float with a known density were placed into a density gradient tube containing a carbon tetrachloride/n-heptane mixed solvent at 25°C, allowed to stand for 24 hr, and then the density was measured.

(v) Tenacity and initial modulus of elasticity

The load at break of a test cord was measured according to JIS L 1017-1995 by pulling the test cord at a constant speed at $25 \pm 2°C$ using an autograph manufactured by Shimadzu Corporation. The load was divided by the fineness to obtain the cord tenacity. The initial modulus of elasticity was obtained from the slope of the initial rising portion of SS curve.

(5) High-load drum endurance of tire having carcass ply cord made of rubber-reinforcing polyester cord (Examples 28-30 and Comparative Examples 21, 22 and 24)

Each pneumatic radial tire 30 as shown in Fig. 6 was produced using respective rubber-reinforcing polyester cords of Examples 28-30 and Comparative Examples 21, 22 and 24 as carcass ply cords 18A. The tire 30 had a tread portion 21, a pair of side portions 19 connected to both the lateral edges of the tread portion 21, and a pair of bead portions 16 disposed inside of each side portion 19, and was reinforced by a carcass ply 18 having the carcass ply cords 18A which were arranged to the radial direction of the tire and a belt ply 20 which surrounded the carcass ply 18 and disposed inside of the tread portion 21. All the tires had the same tire size, 195/65R14, and the same count of the carcass ply cord 18A.

The test tires were inflated at 25 ± 2°C to the maximum air pressure of JIS Standard and the air pressure was adjusted after standing for 24 hr. Then, the tire was allowed to run at 60 km/hr on a drum of about 1.7 m diameter under a load two times higher than the highest load specified in JIS Standard, thereby determining the running distance until the tire failure occurred to evaluate the high-load drum endurance. In this test, the tire was allowed to run until the running distance reached 30,000 km. The high-load drum endurance was expressed by index number of the running distance until the tire failure occurred while taken 30,000 km as 100.

(6) Sticking strength between rubber-reinforcing polyester monofilament cords (Example 28 and Comparative Example 24)

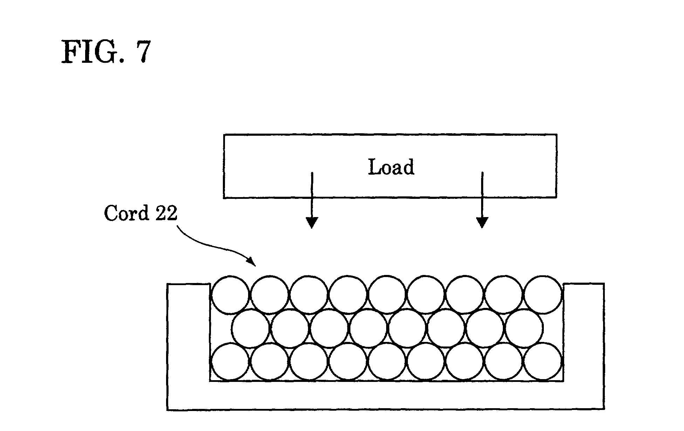

As shown in Fig. 7, respective cords of Example 28 and Comparative Example 24 were packed in a rigid molded container so as to keep the packed structure even under a load. The packed cords were pressed by a load under a surface pressure of 50 gf/cm$^2$ for 5 hr. Then, the peeling resistance when pulling one of the cords out of another at a speed of 30 cm/min was measured in an ambient atmosphere of 25 ± 1°C. The peeling resistance was employed as the sticking strength between the monofilament cords. The results are shown in Tables 6 and 7.

Table 2

|  | Com. Ex. 1 | Ex. 1 | Ex. 2 | Ex. 3 | Ex. 4 |
|---|---|---|---|---|---|
| **Fiber Material** |  |  |  |  |  |
| raw material | polyester | polyester | polyester | polyester | polyester |
| kind | F-3 | F-3 | F-3 | F-3 | F-3 |
| single fiber diameter (μm) | 103 | 103 | 103 | 103 | 103 |
| **Plasma Cleaning** |  |  |  |  |  |
| treatment | no | yes | yes | yes | yes |
| feed gas | – | oxygen | oxygen | argon | oxygen |
| high frequency (MHz) | – | 13.56 | 13.56 | 13.56 | 13.56 |
| electric power (W) | – | 100 | 100 | 100 | 100 |
| **Dry Plating** |  |  |  |  |  |
| treatment | no | yes | yes | yes | yes |
| metal target | – | Co | Co | Co | Cu |
| kind | – | M-1 | M-1 | M-1 | M-2 |
| argon gas supply (ml/min) | – | 18 | 18 | 18 | 18 |
| oxygen gas supply (ml/min) | – | – | 1 | 1 | – |
| high frequency (MHz) | – | 13.56 | 13.56 | 13.56 | 13.56 |
| electric power (W) | – | 300 | 300 | 300 | 300 |
| **Coating Layer** |  |  |  |  |  |
| thickness (Å)  max. | – | 403 | 397 | 414 | 386 |
| min. | – | 205 | 260 | 221 | 195 |
| metal content (atm %) | – | 50 | 43 | – | – |

| Rubber Composition | G-2 | G-2 | G-2 | G-2 | G-2 |
|---|---|---|---|---|---|
| Evaluation Results | | | | | |
| adhesion at 200% elongation | C | A | A | B | A |
| tire endurance | 100 | – | 230 | – | – |
| bead filler rubber–short fiber adhesion | B | – | A | – | – |

Table 2 (contd.)

| | Ex. 5 | Ex. 6 | Ex. 7 | Ex. 8 |
|---|---|---|---|---|
| Fiber Material | | | | |
| raw material | polyester | polyester | polyester | polyester |
| kind | F-3 | F-3 | F-3 | F-3 |
| single fiber diameter (µm) | 103 | 103 | 103 | 103 |
| Plasma Cleaning | | | | |
| treatment | yes | yes | yes | yes |
| feed gas | oxygen | oxygen | oxygen | oxygen |
| high frequency (MHz) | 13.56 | 13.56 | 13.56 | 13.56 |
| electric power (W) | 100 | 100 | 100 | 100 |
| Dry Plating | | | | |
| treatment | yes | yes | yes | yes |
| metal target | Zn | Ti | Ag | Ni |
| kind | M-3 | M-4 | M-5 | M-6 |
| argon gas supply (ml/min) | 18 | 18 | 18 | 18 |
| oxygen gas supply (ml/min) | – | – | – | – |
| high frequency (MHz) | 13.56 | 13.56 | 13.56 | 13.56 |
| electric power (W) | 300 | 300 | 300 | 300 |
| Coating Layer | | | | |
| thickness (Å)  max. | 403 | 392 | 405 | 416 |
| min. | 284 | 265 | 272 | 257 |
| metal content (atm %) | – | – | – | – |
| Rubber Composition | G-2 | G-2 | G-2 | G-2 |
| Evaluation Results | | | | |
| adhesion at 200% elongation | A | A | A | A |
| tire endurance | – | – | – | – |
| bead filler rubber–short fiber adhesion | – | – | – | – |

Table 2 (contd.)

| | Com. Ex. 2 | Ex. 9 | Com. Ex. 3 | Ex. 10 |
|---|---|---|---|---|
| Fiber Material | | | | |
| raw material | polyarylate | polyarylate | nylon | nylon |
| kind | F-5 | F-5 | F-6 | F-6 |
| single fiber diameter ($\mu$m) | 45 | 45 | 125 | 125 |
| Plasma Cleaning | | | | |
| treatment | yes | yes | yes | yes |
| feed gas | oxygen | oxygen | oxygen | oxygen |
| high frequency (MHz) | 13.56 | 13.56 | 13.56 | 13.56 |
| electric power (W) | 100 | 100 | 100 | 100 |
| Dry Plating | | | | |
| treatment | no | yes | no | yes |
| metal target | — | Co | — | Co |
| kind | — | M-1 | — | M-1 |
| argon gas supply (ml/min) | — | 18 | — | 18 |
| oxygen gas supply (ml/min) | — | — | — | — |
| high frequency (MHz) | — | 13.56 | — | 13.56 |
| electric power (W) | — | 300 | — | 300 |
| Coating Layer | | | | |
| thickness (Å)   max. | — | 425 | — | 411 |
|         min. | — | 253 | — | 239 |
| metal content (atm %) | — | — | — | — |
| Rubber Composition | G-2 | G-2 | G-2 | G-2 |
| Evaluation Results | | | | |
| adhesion at 200% elongation | C | A | C | A |
| tire endurance | — | — | — | — |
| bead filler rubber–short fiber adhesion | — | — | — | — |

Table 3

| | Com. Ex. 4 | Ex. 11 | Com. Ex. 5 | Ex. 12 |
|---|---|---|---|---|
| Fiber Material | | | | |
| raw material | aramid | aramid | PVA* | PVA* |
| kind | F-7 | F-7 | F-8 | F-8 |
| single fiber diameter ($\mu$m) | 100 | 100 | 120 | 120 |
| Plasma Cleaning | | | | |
| treatment | yes | yes | yes | yes |
| feed gas | oxygen | oxygen | oxygen | oxygen |
| high frequency (MHz) | 13.56 | 13.56 | 13.56 | 13.56 |
| electric power (W) | 100 | 100 | 100 | 100 |
| Dry Plating | | | | |
| treatment | no | yes | no | yes |
| metal target | — | Co | — | Co |
| kind | — | M-1 | — | M-1 |
| argon gas supply (ml/min) | — | 18 | — | 18 |
| oxygen gas supply (ml/min) | — | — | — | — |
| high frequency (MHz) | — | 13.56 | — | 13.56 |
| electric power (W) | — | 300 | — | 300 |
| Coating Layer | | | | |
| thickness (Å)   max. | — | 422 | — | 411 |
| min. | — | 231 | — | 285 |
| metal content (atm %) | — | — | — | — |
| Rubber Composition | G-2 | G-2 | G-2 | G-2 |
| Evaluation Results | | | | |
| adhesion at 200% elongation | C | A | C | A |

*PVA = Poly(vinyl alcohol)

Table 3 (contd.)

| | Com. Ex. 6 | Ex. 13 | Com. Ex. 7 | Ex. 14 |
|---|---|---|---|---|
| **Fiber Material** | | | | |
| raw material | PAN* | PAN* | PP* | PP* |
| kind | F-9 | F-9 | F-10 | F-10 |
| single fiber diameter (μm) | 10 | 10 | 53 | 53 |
| **Plasma Cleaning** | | | | |
| treatment | yes | yes | yes | yes |
| feed gas | oxygen | oxygen | oxygen | oxygen |
| high frequency (MHz) | 13.56 | 13.56 | 13.56 | 13.56 |
| electric power (W) | 100 | 100 | 100 | 100 |
| **Dry Plating** | | | | |
| treatment | no | yes | no | yes |
| metal target | – | Co | – | Co |
| kind | – | M-1 | – | M-1 |
| argon gas supply (ml/min) | – | 18 | – | 18 |
| oxygen gas supply (ml/min) | – | – | – | – |
| high frequency (MHz) | – | 13.56 | – | 13.56 |
| electric power (W) | – | 300 | – | 300 |
| **Coating Layer** | | | | |
| thickness (Å)  max. | – | 433 | – | 406 |
| min. | – | 274 | – | 256 |
| metal content (atm %) | – | – | – | – |
| **Rubber Composition** | G-2 | G-2 | G-2 | G-2 |
| **Evaluation Results** | | | | |
| adhesion at 200% elongation | C | A | C | A |

*PAN = Polyacrylonitrile

*PP = Polypropylene

Table 3 (contd.)

| | Com. Ex. 8 | Ex. 15 | Com. Ex. 9 | Ex. 16 |
|---|---|---|---|---|
| **Fiber Material** | | | | |
| raw material | polyimide | polyimide | polysulfide | polysulfide |
| kind | F-11 | F-11 | F-12 | F-12 |
| single fiber diameter (μm) | 31 | 31 | 19 | 19 |
| **Plasma Cleaning** | | | | |
| treatment | yes | yes | yes | yes |
| feed gas | oxygen | oxygen | oxygen | oxygen |
| high frequency (MHz) | 13.56 | 13.56 | 13.56 | 13.56 |
| electric power (W) | 100 | 100 | 100 | 100 |
| **Dry Plating** | | | | |
| treatment | no | yes | no | yes |

| | | | | |
|---|---|---|---|---|
| metal target | – | Co | – | Co |
| kind | – | M-1 | – | M-1 |
| argon gas supply (ml/min) | – | 18 | – | 18 |
| oxygen gas supply (ml/min) | – | – | – | – |
| high frequency (MHz) | – | 13.56 | – | 13.56 |
| electric power (W) | – | 300 | – | 300 |
| Coating Layer | | | | |
| thickness (Å)   max. | – | 429 | – | 425 |
| min. | – | 222 | – | 239 |
| metal content (atm %) | – | – | – | – |
| Rubber Composition | G-2 | G-2 | G-2 | G-2 |
| Evaluation Results | | | | |
| adhesion at 200% elongation | C | A | C | A |

Table 4

| | Com. Ex. 10 | Ex. 17 | Com. Ex. 11 | Ex. 18 | Com. Ex. 12 |
|---|---|---|---|---|---|
| **Fiber Material** | | | | | |
| raw material | polyether | polyether | PBA* | PBA* | phenol |
| kind | F-13 | F-13 | F-14 | F-14 | F-15 |
| single fiber diameter ($\mu$m) | 200 | 200 | 11 | 11 | 33 |
| **Plasma Cleaning** | | | | | |
| treatment | yes | yes | yes | yes | yes |
| feed gas | oxygen | oxygen | oxygen | oxygen | oxygen |
| high frequency (MHz) | 13.56 | 13.56 | 13.56 | 13.56 | 13.56 |
| electric power (W) | 100 | 100 | 100 | 100 | 100 |
| **Dry Plating** | | | | | |
| treatment | no | yes | no | yes | no |
| metal target | – | Co | – | Co | – |
| kind | – | M-1 | – | M-1 | – |
| argon gas supply (ml/min) | – | 18 | – | 18 | – |
| oxygen gas supply (ml/min) | – | – | – | – | – |
| high frequency (MHz) | – | 13.56 | – | 13.56 | – |
| electric power (W) | – | 300 | – | 300 | – |
| **Coating Layer** | | | | | |
| thickness (Å)  max. | – | 410 | – | 452 | – |
| min. | – | 262 | – | 244 | – |
| metal content (atm %) | – | – | – | – | – |
| **Rubber Composition** | G-2 | G-2 | G-2 | G-2 | G-2 |
| **Evaluation Results** | | | | | |
| adhesion at 200% elongation | C | A | C | A | C |

*PBA = Polybenzazole

Table 4 (contd.)

| | Ex. 19 | Com. Ex. 13 | Ex. 20 | Com. Ex. 14 | Ex. 21 |
|---|---|---|---|---|---|
| **Fiber Material** | | | | | |
| raw material | phenol | viscose | viscose | SPC* | SPC* |
| kind | F-15 | F-16 | F-16 | F-17 | F-17 |
| single fiber diameter (μm) | 33 | 12 | 12 | 10 | 10 |
| **Plasma Cleaning** | | | | | |
| treatment | yes | yes | yes | yes | yes |
| feed gas | oxygen | oxygen | oxygen | oxygen | oxygen |
| high frequency (MHz) | 13.56 | 13.56 | 13.56 | 13.56 | 13.56 |
| electric power (W) | 100 | 100 | 100 | 100 | 100 |
| **Dry Plating** | | | | | |
| treatment | yes | no | yes | no | yes |
| metal target | Co | – | Co | – | Co |
| kind | M-1 | – | M-1 | – | M-1 |
| argon gas supply (ml/min) | 18 | – | 18 | – | 18 |
| oxygen gas supply (ml/min) | – | – | – | – | – |
| high frequency (MHz) | 13.56 | – | 13.56 | – | 13.56 |
| electric power (W) | 300 | – | 300 | – | 300 |
| **Coating Layer** | | | | | |
| thickness (Å)  max. | 428 | – | 418 | – | 398 |
| min. | 251 | – | 216 | – | 257 |
| metal content (atm %) | – | – | – | – | – |
| **Rubber Composition** | G-2 | G-2 | G-2 | G-2 | G-2 |
| **Evaluation Results** | | | | | |
| adhesion at 200% elongation | A | C | A | C | A |

*SPC = Solvent-spun cellulose

Table 5

| | Com. Ex. 15 | Ex. 22 | Com. Ex. 16 | Ex. 23 |
|---|---|---|---|---|
| Fiber Material | | | | |
| raw material | carbon | carbon | alumina | alumina |
| kind | I-1 | I-1 | I-2 | I-2 |
| single fiber diameter (μm) | 17 | 17 | 11 | 11 |
| Plasma Cleaning | | | | |
| treatment | yes | yes | yes | yes |
| feed gas | oxygen | oxygen | oxygen | oxygen |
| high frequency (MHz) | 13.56 | 13.56 | 13.56 | 13.56 |
| electric power (W) | 100 | 100 | 100 | 100 |
| Dry Plating | | | | |
| treatment | no | yes | no | yes |
| metal target | – | Co | – | Co |
| kind | – | M-1 | – | M-1 |
| argon gas supply (ml/min) | – | 18 | – | 18 |
| oxygen gas supply (ml/min) | – | – | – | – |
| high frequency (MHz) | – | 13.56 | – | 13.56 |
| electric power (W) | – | 300 | – | 300 |
| Coating Layer | | | | |
| thickness (Å)   max. | – | 412 | – | 495 |
| min. | – | 263 | – | 208 |
| metal content (atm %) | – | – | – | – |
| Rubber Composition | G-2 | G-2 | G-2 | G-2 |
| Evaluation Results | | | | |
| adhesion at 200% elongation | C | A | C | A |

Table 5 (contd.)

| | Com. Ex. 17 | Ex. 24 | Com. Ex. 18 | Ex. 25 |
|---|---|---|---|---|
| Fiber Material | | | | |
| raw material | tyranno | tyranno | glass | glass |
| kind | I-3 | I-3 | I-4 | I-4 |
| single fiber diameter (μm) | 8.5 | 8.5 | 9 | 9 |
| Plasma Cleaning | | | | |
| treatment | yes | yes | yes | yes |
| feed gas | oxygen | oxygen | oxygen | oxygen |
| high frequency (MHz) | 13.56 | 13.56 | 13.56 | 13.56 |
| electric power (W) | 100 | 100 | 100 | 100 |
| Dry Plating | | | | |
| treatment | no | yes | no | yes |
| metal target | – | Co | – | Co |
| kind | – | M-1 | – | M-1 |
| argon gas supply (ml/min) | – | 18 | – | 18 |
| oxygen gas supply (ml/min) | – | – | – | – |
| high frequency (MHz) | – | 13.56 | – | 13.56 |
| electric power (W) | – | 300 | – | 300 |
| Coating Layer | | | | |
| thickness (Å) max. | – | 424 | – | 405 |
| min. | – | 223 | – | 230 |
| metal content (atm %) | – | – | – | – |
| Rubber Composition | G-2 | G-2 | G-2 | G-2 |
| Evaluation Results | | | | |
| adhesion at 200% elongation | C | A | C | A |

Table 5 (contd.)

| | Com. Ex. 19 | Ex. 26 | Com. Ex. 20 | Ex. 27 |
|---|---|---|---|---|
| Fiber Material | | | | |
| raw material | glass | glass | glass | glass |
| kind | I-5 | I-5 | I-6 | I-6 |
| single fiber diameter (μm) | 9 | 9 | 10–24 | 10–24 |
| Plasma Cleaning | | | | |
| treatment | yes | yes | yes | yes |
| feed gas | oxygen | oxygen | oxygen | oxygen |
| high frequency (MHz) | 13.56 | 13.56 | 13.56 | 13.56 |
| electric power (W) | 100 | 100 | 100 | 100 |
| Dry Plating | | | | |
| treatment | no | yes | no | yes |
| metal target | – | Co | – | Co |
| kind | – | M-1 | – | M-1 |
| argon gas supply (ml/min) | – | 18 | – | 18 |
| oxygen gas supply (ml/min) | – | – | – | – |
| high frequency (MHz) | – | 13.56 | – | 13.56 |
| electric power (W) | – | 300 | – | 300 |
| Coating Layer | | | | |
| thickness (Å) max. | – | 2830 | – | 512 |
| min. | – | 16 | – | 138 |
| metal content (atm %) | – | – | – | – |
| Rubber Composition | G-2 | G-2 | G-2 | G-2 |
| Evaluation Results | | | | |
| adhesion at 200% elongation | C | A | C | A |

Table 6

| | Com. Ex. 21 | Com. Ex. 22 | Com. Ex. 23 |
|---|---|---|---|
| Fiber Material | | | |
| raw material | polyester | polyester | polyester |
| kind | F-1 | F-2 | F-4 |
| form | monofilament cord | twisted cord | twisted cord |
| number of filament | 1 | 3 | 760 |
| Plasma Cleaning | | | |
| treatment | yes | yes | yes |
| feed gas | oxygen | oxygen | oxygen |
| Dry Plating | | | |
| treatment | no | no | no |
| metal target | — | — | — |
| kind | — | — | — |
| argon gas supply (ml/min) | — | — | — |
| oxygen gas supply (ml/min) | — | — | — |
| Coating Layer | | | |
| thickness (Å)  max. | — | — | — |
| min. | — | — | — |
| Fiber Properties after Coating | | | |
| intrinsic viscosity (IV) | — | — | — |
| birefringence $\Delta n$ | — | — | — |
| crystal orientation | — | — | — |
| density (g/cm$^3$) | — | — | — |
| tenacity (g/dtex) | — | — | — |
| initial modulus (g/dtex) | — | — | — |
| Twisting before or after coating | — | — | — |
| Rubber Composition | G-1 | G-1 | G-1 |
| Evaluation Results | | | |
| peel strength after vulcanization (N/cord) | 0.9 | 1.8 | 1.2 |
| sticking strength between cords (N/cord) | — | — | — |
| high-load drum endurance (km) | immediate failure | immediate failure | — |

Table 6 (contd.)

| | Ex. 28 | Ex. 29 | Ex. 30 |
|---|---|---|---|
| Fiber Material | | | |
| raw material | polyester | polyester | polyester |
| kind | F-1 | F-2 | F-1 |
| form | monofilament cord | twisted cord | twisted cord |
| number of filament | 1 | 3 | 3 |
| Plasma Cleaning | | | |
| treatment | yes | yes | yes |
| feed gas | oxygen | oxygen | oxygen |
| Dry Plating | | | |
| treatment | yes | yes | yes |
| metal target | Co | Co | Co |
| kind | M-1 | M-1 | M-1 |
| argon gas supply (ml/min) | 18 | 18 | 18 |
| oxygen gas supply (ml/min) | 1 | 1 | 1 |
| Coating Layer | | | |
| thickness (Å) max. | 386 | 410 | 386 |
| min. | 320 | 180 | 320 |
| Fiber Properties after Coating | | | |
| intrinsic viscosity (IV) | 0.89 | – | 0.89 |
| birefringence Δn | 0.187 | – | 0.187 |
| crystal orientation | 0.936 | – | 0.936 |
| density (g/cm$^3$) | 1.403 | – | 1.403 |
| tenacity (g/dtex) | 6.03 | – | 6.03 |
| initial modulus (g/dtex) | 74.7 | – | 74.7 |
| Twisting before or after coating | – | before | after |
| Rubber Composition | G-1 | G-1 | G-1 |
| Evaluation Results | | | |
| peel strength after vulcanization (N/cord) | 20.9 | 31.1 | 38.7 |
| sticking strength between cords (N/cord) | ≤0.01 | – | – |
| high-load drum endurance (km) | 100 | 92 | 100 |

Table 7

| | Com. Ex. 24 |
|---|---|
| Fiber Material | |
| raw material | polyester |
| kind | F-1 |
| form | monofilament cord |

Table 7 (continued)

| | Com. Ex. 24 |
|---|---|
| Fiber Material | |
| number of filament | 1 |
| Adhesive Treatment by Dipping | yes |
| Fiber Properties | |
| intrinsic viscosity (IV) | 0.9 |
| birefringence $\Delta n$ | 0.187 |
| crystal orientation | 0.937 |
| density $(g/cm^3)$ | 1.404 |
| tenacity (g/dtex) | 6.21 |
| initial modulus (g/dtex) | 73.8 |
| Twistang after adhesion treatment | no |
| Rubber Composition | G-1 |
| Evaluation Results | |
| peel strength after vulcanization (N/cord) | 18.7 |
| sticking strength between cords (N/cord) | 0.22 |
| high-load drum endurance (km) | 59 |

As seen from Tables 2 to 5, Examples 1 to 27 using the rubber-reinforcing short fibers of the present invention showed a higher rubber-fiber adhesion at 200% elongation as compared with Comparative Examples 1 to 20. Further, as seen from Tables 6 and 7, Examples 28 to 30 using the rubber-reinforcing polyester monofilament cords of the present invention showed a higher peel strength between the vulcanized rubber and the cords as compared with Comparative Examples 21 to 24. It would appear that an excellent adhesion strength can be attained by forming the coating layer.

The comparison between Example 28 and Comparative Example 24 teaches that the monofilament cord of the present invention is low in the sticking strength between the cords, and teaches that the cords having the coating layer is less sticky, high in the peel strength between the vulcanized rubber and the cords, and excellent in the high-load drum endurance as compared with the cords subjected to a conventional adhesive treatment by dipping.

The comparison between Examples 1 and 4 shows that the plasma cleaning in oxygen gas atmosphere is preferred to the plasma cleaning in argon gas atmosphere, because the effect of cleaning the impurities on the fiber surface is high in the plasma cleaning in oxygen gas atmosphere.

In Examples 28 and 29 and Comparative Example 21 and 24, the total dtex number of the cords (fineness of total filament) were equally 3340 dtex. Upon comparing Example 28, Comparative Example 21, each using the monofilament F-1, and Comparative Example 23 using the cord F-4 having a filament number larger than 10, it can be recognized that Example 28 where the coating layer was formed is excellent in the adhesion strength. It can be further found that the difference is observed between the degree of improvement in the adhesion strength. Namely, the adhesion strength increases 20.0 N/filament in the monofilament cord, while increases 1.2 N/filament in the twisted cord of a filament number of 760. Thus, it can be seen that the improving effect on the adhesion strength becomes large when the coating layer is formed by dry plating on an organic fiber material having a filament number of 10 or less.

Industrial Applicability

As described in detail, the rubber-reinforcing fiber produced by the production method of the present invention firmly adheres to the rubber component, and shows an excellent fatigue resistance and durability during the use in rubber. Therefore, the rubber-reinforcing fiber of the present invention is suitable for reinforcing rubber articles, particularly, suitable as a carcass ply cord and a bead filler of a pneumatic tire.

**Claims**

1.    A rubber-reinforcing fiber comprising an organic fiber or an inorganic fiber made of an non-metallic inorganic compound, the organic fiber or the inorganic fiber being provided with a coating layer of 10 Å to 40 μm thick, and the

coating layer containing at least one metal and/or metal compound selected from the group consisting of cobalt, zinc, copper, titanium, silver, nickel and compounds of the preceding metals.

2. The rubber-reinforcing fiber according to claim 1, wherein the coating layer contains metallic cobalt and/or cobalt oxide in an amount of 5 % by weight or more in elemental cobalt basis.

3. The rubber-reinforcing fiber according to claim 1, wherein the coating layer contains metallic cobalt and/or cobalt oxide in an amount of 20 % by weight or more in elemental cobalt basis.

4. The rubber-reinforcing fiber according to claim 1, wherein the coating layer contains metallic cobalt and/or cobalt oxide in an amount of 50 % by weight or more in elemental cobalt basis.

5. The rubber-reinforcing fiber according to any one of claims 1 to 4, wherein the organic fiber or the inorganic fiber is substantially non-bundled.

6. The rubber-reinforcing fiber according to any one of claims 1 to 4, wherein the organic or inorganic fiber substantially non-bundled is a fiber aggregate comprising a single filament, a multifilament of ten pieces or less of filaments, or a parallel filament of ten pieces or less of adjoining filaments.

7. The rubber-reinforcing fiber according to claim 6, wherein a space between adjoining filaments of the parallel filament of ten pieces or less of adjoining filaments is $(\sqrt{2} - 1)$d wherein d is a diameter of filament.

8. The rubber-reinforcing fiber according to claim 6 or 7, wherein the fiber aggregate has a permeability to dry plating particles, which allows the plating particles passing through the fiber aggregate to form a plating layer having a maximum thickness of 10 Å or more on a film disposed on the back surface of the fiber aggregate with a distance of 1 mm or less, when measured by carrying out a dry plating treatment under conditions such that a plating layer having a maximum thickness of 40 μm or less is formed on a film disposed on the front surface of the fiber aggregate.

9. The rubber-reinforcing fiber according to claim 6 or 7, wherein the fiber aggregate has a permeability to dry plating particles, which allows the plating particles passing through the fiber aggregate to form a plating layer having a minimum thickness of 10 Å or more on a film disposed on the back surface of the fiber aggregate with a distance of 1 mm or less, when measured by carrying out a dry plating treatment under conditions such that a plating layer having a maximum thickness of 40 μm or less is formed on a film disposed on the front surface of the fiber aggregate.

10. The rubber-reinforcing fiber according to any one of claims 1 to 9, wherein the organic fiber is a polyester fiber, a polyamide fiber, a poly(vinyl alcohol) fiber, an acrylic fiber, a polyolefin fiber, a polyimide fiber, a poly(phenylene sulfide) fiber, a poly(ether ether ketone) fiber, a polybenzazole fiber, a viscose fiber, or a solvent-spun cellulose fiber; and the inorganic fiber made of a non-metallic inorganic compound is a carbon fiber, a ceramic fiber or a glass fiber.

11. The rubber-reinforcing fiber according to any one of claims 1 to 10, wherein the organic fiber comprises a polyester monofilament cord made of poly(ethylene terephthalate) or mainly made of poly(ethylene terephthalate), and satisfies all the following requirements:

   (a) intrinsic viscosity: 0.85 dl/g or higher;
   (b) birefringence: 0.17 or higher;
   (c) crystal orientation: 0.88 or higher;
   (d) density: 1.32 g/cm$^3$ or higher;
   (e) fineness: 1000 to 9000 dtex;
   (f) tenacity: 5.2 gf/dtex or higher; and
   (g) initial modulus: 50 gf/dtex or higher.

12. The rubber-reinforcing fiber according to any one of claims 1 to 11, wherein the organic fiber is a polyester short fiber, a polyamide short fiber, a poly(vinyl alcohol) short fiber, an acrylic short fiber, a polyolefin short fiber, a polyimide short fiber, a poly(phenylene sulfide) short fiber, a poly(ether ether ketone) short fiber, a polybenzazole short fiber, a viscose short fiber, or a solvent-spun cellulose short fiber.

13. A method for producing a rubber-reinforcing fiber, comprising a step of dry-plating a coating layer of a thickness of 10 Å to 40 μm on an organic or inorganic fiber which is substantially non-twisted, the coating layer containing at least one metal and/or metal compound selected from the group consisting of cobalt, zinc, copper, titanium, silver, nickel and compounds of the preceding metals.

14. The method according to claim 13, wherein the organic or inorganic fiber is subjected to a plasma cleaning or plasma etching treatment for removing impurities prior to the formation of the coating layer.

15. The method according to claim 13 or 14, wherein the organic or inorganic fiber is further subjected to a processing for twisting or cutting into short fiber after dry-plating the coating layer.

16. The method according to any one of claims 13 to 15, wherein the coating layer is continuously formed by subjecting the organic or inorganic fiber comprising a single filament or ten pieces or less of filaments to the dry-plating treatment or to the dry-plating treatment successively after the plasma treatment while allowing the fiber to continuously run by pulling the fiber in its length direction.

17. The method according to any one of claims 13 to 16, wherein the coating layer is formed by subjecting a plurality of the organic or inorganic fibers arranged at intervals to the dry-plating treatment or to the dry-plating treatment successively after the plasma treatment while allowing the fibers to continuously run by pulling the fibers in their length direction, each fiber comprising a single filament or ten pieces or less of filaments, thereby forming the coating layer on a plurality of the fibers simultaneously and continuously.

18. The method according to any one of claims 13 to 15, wherein a fiber aggregate comprising entangled plurality of filaments each substantially not twisted with an adjoining filament is subjected to the dry-plating or to the dry-plating treatment successively after the plasma treatment to form the coating layer having a thickness of 10 Å to 40 μm; and then the dry-plated fiber aggregate is processed into short fibers.

19. The method according to claim 13 or 14, wherein a single short fiber filament or a plurality of short fiber filaments are subjected to the dry-plating treatment or subjected to the dry-plating treatment successively after the plasma treatment while keeping the short fiber filament or filaments moving on a stationary or running support, thereby forming the coating layer on the short fiber filament or filaments.

20. The method according to any one of claims 13 to 19, wherein the dry plating is a physical vapor deposition by vacuum deposition or ion plating.

21. The method according to any one of claims 13 to 19, wherein the dry plating is a physical vapor deposition by sputtering.

22. A rubber-fiber composite comprising the rubber-reinforcing fiber as defined in any one of claims 1 to 12 and a rubber composition.

23. A vulcanizable rubber article comprising the rubber-fiber composite as defined in claim 22.

24. The vulcanizable rubber article according to claim 23, which is a pneumatic tire.

25. The vulcanizable rubber article according to claim 24, wherein the pneumatic tire has a carcass constructed by a carcass ply reinforced with the rubber-fiber composite.

26. The vulcanizable rubber article according to claim 24, wherein the pneumatic tire has a bead portion comprising a bead wire and a bead filler, in which the bead filler is reinforced with the rubber-fiber composite.

27. A pneumatic tire which comprises a tread portion, a pair of side portions connected to both lateral edges of the tread portion and a pair of bead portions disposed inside of each side portion, and which is reinforced by a carcass ply having carcass ply cords which were arranged along the radial direction of the tire and a belt ply which surrounds the carcass ply and is disposed inside of the tread portion, wherein the carcass ply cord is made of the rubber-reinforcing fiber as defined in claim 11.

28. A pneumatic tire comprising a bead wire disposed in a bead portion; a carcass ply which comprises a rubber-coated cord layer made of a plurality of parallel cords, each end of the carcass ply being turned up at the bead portions and fixed to the bead portion; and a bead filler disposed radially outward of the bead wire, wherein the bead filler comprises the short fiber as defined in claim 12 having a length of 100 mm or less and a diameter of 0.0001 to 0.8 mm.

# FIG. 1

Unwind
Means 5

Plasma Treating
Apparatus 1

Wind-up
Means 6

Speed
Regulator 3

Dry Plating
Apparatus 2

Speed
Regulator 4

# FIG. 2

Organic Fiber Material

Running
Direction

Comb-Shaped
Guide 7

# FIG. 3

Plasma Treating
Apparatus 1

Feed Gas

Gas Inlet 8

Organic
Fiber Material

Differential Evacuation

Differential Evacuation

Gas Outlet 9

Exhaust Gas

# FIG. 4

Gas Inlet 11  Feed Gas  Dry Plating Apparatus 2

Organic Fiber Material

SUNUS

SUNUS

Differential Evacuation  Exhaust Gas  Differential Evacuation

Gas Outlet 12

# FIG. 5

14

10

13

15

# FIG. 6

21  20  30

18A

19  18

16

# FIG. 7

Load

Cord 22

# EP 1 277 874 A1

<table>
<tr><td colspan="2"><strong>INTERNATIONAL SEARCH REPORT</strong></td><td>International application No.<br>PCT/JP01/03726</td></tr>
</table>

| A. CLASSIFICATION OF SUBJECT MATTER |
|---|
| Int.Cl⁷ D06M11/83, 11/49, B60C 9/00, 15/06 |

According to International Patent Classification (IPC) or to both national classification and IPC

| B. FIELDS SEARCHED |
|---|
| Minimum documentation searched (classification system followed by classification symbols)<br> Int.Cl⁷ D06M11/00-84 |

Documentation searched other than minimum documentation to the extent that such documents are included in the fields searched
   Jitsuyo Shinan Koho      1926-1996   Toroku Jitsuyo Shinan Koho  1994-2001
   Kokai Jitsuyo Shinan Koho  1971-2001   Jitsuyo Shinan Toroku Koho  1996-2001

Electronic data base consulted during the international search (name of data base and, where practicable, search terms used)
   WPI/L

| C. DOCUMENTS CONSIDERED TO BE RELEVANT | | |
|---|---|---|
| Category* | Citation of document, with indication, where appropriate, of the relevant passages | Relevant to claim No. |
| Y | JP, 59-53780, A (Sumitomo Chemical Company, Limited),<br>28 March, 1984 (28.03.84),<br>Full text  (Family: none) | 1-28 |
| Y | JP, 62-149984, A (Toho Rayon Co., Ltd.),<br>03 July, 1987 (03.07.87),<br>Full text<br>& DE, 3642930, A   & US, 3642930, A | 1-28 |
| Y | JP, 3-90674, A (Kuraray Co., Ltd.),<br>16 April, 1991 (16.04.91),<br>Full text<br>(Family: none) | 1-28 |
| Y | JP, 62-110968, A (Asahi Chemical Industry Co., Ltd.),<br>22 May, 1987 (22.05.87),<br>Full text  (Family: none) | 1-28 |
| Y | JP, 61-287932, A (Bridgestone Corporation),<br>18 December, 1986 (18.12.86),<br>Full text  (Family: none) | 1-28 |

☒ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br> 27 June, 2001 (27.06.01) | Date of mailing of the international search report<br> 10 July, 2001 (10.07.01) |
| Name and mailing address of the ISA/<br> Japanese Patent Office | Authorized officer |
| Facsimile No. | Telephone No. |

Form PCT/ISA/210 (second sheet) (July 1992)

43

**INTERNATIONAL SEARCH REPORT**

International application No.

PCT/JP01/03726

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 61-291628, A (Bridgestone Corporation), 22 December, 1986 (22.12.86), Full text (Family: none) | 1-28 |
| Y | JP, 62-189117, A (Bridgestone Corporation), 18 August, 1987 (18.08.87), Full text & DE, 3635121, A & US, 4872932, A | 1-28 |
| Y | JP, 62-87310, A (Bridgestone Corporation), 21 April, 1987 (21.04.87), Full text & DE, 3635121, A & US, 4872932, A | 1-28 |

Form PCT/ISA/210 (continuation of second sheet) (July 1992)